# EUROPEAN PATENT APPLICATION

(11) **EP 3 951 589 A1**
(43) Date of publication of application: **09.02.2022**
(21) Application number: 20832852.6
(22) Date of filing: 28.06.2020
(51) Int. Cl.: G06F 9/451

(54) **VIEW DISPLAY METHOD AND ELECTRONIC DEVICE**

(30) Priority: 28.06.2019 CN 201910582881
(71) Applicant: Huawei Technologies Co., Ltd., Shenzhen, Guangdong 518129 (CN)
(72) Inventor: ZHU, Pei, Shenzhen, Guangdong 518129 (CN); WEN, Ping, Shenzhen, Guangdong 518129 (CN)
(74) Representative: Gill Jennings & Every LLP
(86) International application number: PCT/CN2020/098416
(87) International publication number: WO 2020/259669

(57) **Abstract**

A view display method and an electronic device are provided. In the method, the electronic device displays a first window of a first application. The first window includes a first view, and the first view is one of minimum control units included in the first window. The electronic device detects a first operation performed on the first view, generates a second window in response to the first operation, and displays the second window in a floating manner. The second window includes the first view. In this way, the first view in the first window may be separately displayed in the second window, to meet a requirement of a user for separately displaying view content that the user is interested in, so as to improve user experience.

## Description

This application claims priority to Chinese Patent Application No. 201910582881.5, filed with the China National Intellectual Property Administration on June 28, 2019 and entitled "VIEW DISPLAY METHOD AND ELECTRONIC DEVICE", which is incorporated herein by reference in its entirety.

### TECHNICAL FIELD

The present invention relates to the field of terminal technologies, and in particular, to a view display method and an electronic device.

### BACKGROUND

Currently, a display is disposed on most electronic devices. Various graphical user interfaces (graphical user interfaces, GUIs) may be displayed on the display, and windows of applications may be displayed on the GUI.

In some scenarios, after a user starts an application A, a window of the application A may be displayed on the display. The user is interested in content of a view B in the window of the application A, and wants to always view the content of the view B when flipping through other content in the window of the application A or when a window of another application is displayed on the display. However, a conventional display technology cannot meet this requirement of the user.

### SUMMARY

Embodiments of this application provide a view display method and an electronic device, to display a window in a form of a view on a display, thereby meeting a requirement of a user for separately displaying view content that the user is interested in and that is in an application window.

According to a first aspect, an embodiment of this application provides a view display method. The method may be performed by an electronic device (for example, a mobile phone, a pad, or a notebook computer). The method includes: The electronic device displays a first window of a first application. The first window includes a first view, and the first view is one of minimum control units included in the first window. The electronic device detects a first operation performed on the first view, and generates a second window in response to the first operation. The second window includes the first view. The electronic device displays the second window.

Based on this solution, the first view in the first window may be separately displayed in the second window, to meet a requirement of a user for separately displaying view content that the user is interested in, so as to improve user experience.

In a possible design, the electronic device may display a view separation option in response to the first operation, and then separate the first view from the first window in response to a second operation performed on the view separation option. The electronic device adds the separated first view to the second window.

According to this design, the electronic device may provide the view separation option for the user, so that after the user selects the view separation option, the electronic device separates the first view from the first window, and adds the separated first view to the second window.

In a possible design, the first window corresponds to a first view tree, and the first view tree includes a first sub-view tree corresponding to the first view. In response to the first operation, the electronic device may separate the first sub-view tree from the first view tree, and separate the first view from the first window.

According to this design, the electronic device may separate the first sub-view tree from the first view tree, to separate the first view from the first window.

In a possible design, after the electronic device generates the second window in response to the first operation, the electronic device may further generate a restore control in the first window. Then, the electronic device may restore the first view to the first window in response to a third operation performed on the restore control.

According to this design, the electronic device provides the user with a simple manner of restoring the first view. For example, the first view is separated from the first window and then added to the second window. The user may perform a tapping operation on the restore control, to restore the first view in the second window to the first window.

In a possible design, the electronic device may display the second window in a floating manner, and a size of the second window is smaller than a size of the first window.

According to this design, the electronic device displays the second window in the floating manner, so that when the user continues to flip through content in the first window or closes the first application and starts a second application, the second window may still be displayed at an uppermost layer. In this way, the user may always view the first view in the second window. In addition, the size of the second window is smaller than the size of the first window. Even if the second window is stacked on the first window for display, all the content in the first window may not be completely blocked, so that when viewing the first view in the second window, the user may further continue to view an unblocked view in the first window, or perform an operation on an unblocked view in the first window.

In a possible design, after the electronic device generates the second window in response to the first operation, the electronic device may further display the first window in a first region, and display the second window in a second region. The first region does not overlap the second region.

According to this design, the first window and the second window are separately displayed in different regions, so that the two windows do not block each other, to improve user experience.

In a possible design, the electronic device may further display a window of the second application, and the second window is stacked on the window of the second application.

According to this design, when the electronic device displays the window of the second application, the second window stacked on the window of the second application may still be viewed, so that the user may always view the first view in the second window.

According to a second aspect, an embodiment of this application provides a view display method. The method may be performed by an electronic device (for example, a mobile phone, a pad, or a notebook computer). The method includes: The electronic device displays a first window of a first application. The first window includes a first view, and the first view is one of minimum control units included in the first window. The electronic device detects a fourth operation performed on the first view, and generates a third window in response to the fourth operation. The third window includes a copy of the first view. Then, the electronic device displays the third window.

Based on this solution, the electronic device may separately display the copy of the first view in the first window in the third window, to meet a requirement of a user for separately displaying view content that the user is interested in, so as to improve user experience.

In a possible design, the electronic device may display a view sharing option in response to the fourth operation. The electronic device may replicate the first view in the first window in response to a fifth operation performed on the view sharing option, to obtain the copy of the first view. Then, the copy of the first view is added to the third window.

According to this design, the electronic device may provide the user with the view sharing option, so that after the user selects the view sharing option, the electronic device may replicate the first view in the first window to obtain the copy of the first view. In this way, the copy of the first view may be separately displayed in the third window.

In a possible design, the first window corresponds to a first view tree, and the first view tree includes a first sub-view tree corresponding to the first view. The electronic device may replicate the first sub-view tree in the first view tree to obtain a copy of the first sub-view tree, and replicate the first view in the first window to obtain the copy of the first view. Then, the electronic device may add the copy of the first sub-view tree to a third view tree corresponding to the third window.

According to this design, the electronic device may separate the first sub-view tree from the first view tree, to separate the first view from the first window.

In a possible design, the electronic device may display the third window in a floating manner. A size of the third window is smaller than a size of the first window.

According to this design, the electronic device displays the third window in the floating manner, so that when the user continues to flip through content in the first window or closes the first application and starts a second application, the third window may still be displayed at an uppermost layer. In this way, the user may always view the copy of the first view in the third window. In addition, the size of the third window is smaller than the size of the first window. Even if the third window is stacked on the first window for display, all the content in the first window may not be completely blocked, so that when viewing the copy of the first view in the third window, the user may further continue to view an unblocked view in the first window, or perform an operation on an unblocked view in the first window.

In a possible design, the electronic device may further display a window of the second application. The third window is stacked on the window of the second application.

According to this design, when the electronic device displays the window of the second application, the third window stacked on the window of the second application may still be viewed, so that the user may always view the copy of the first view in the third window.

In a possible design, the electronic device may further display the window of the second application. After displaying the third window, the electronic device may further add the copy of the first view in the third window to the window of the second application, and then delete the third window.

According to this design, the electronic device may add the copy of the first view in the first window to the window of the second application, so that when the electronic device displays the window of the second application, the user may view the copy of the first view in the window of the second application.

According to a third aspect, an embodiment of this application further provides an electronic device. The electronic device includes a display, one or more processors, a memory, a plurality of applications, and one or more computer programs. The one or more computer programs are stored in the memory, and the one or more computer programs include instructions. When the instructions are executed by the electronic device, the electronic device is enabled to implement the method according to any one of the first aspect or the possible designs of the first aspect, or implement the method according to any one of the second aspect or the possible designs of the second aspect.

According to a fourth aspect, an embodiment of this application further provides a computer-readable storage medium. The computer-readable storage medium stores a computer program. When the computer program is run on an electronic device, the electronic device is enabled to implement the method according to any one of the first aspect or the possible designs of the first aspect, or implement the method according to any one of the second aspect or the possible designs of the second aspect.

According to a fifth aspect, an embodiment of this application further provides a computer program product including instructions. When the computer program product runs on an electronic device, the electronic device is enabled to implement the method according to any one of the first aspect or the possible designs of the first aspect, or implement the method according to any one of the second aspect or the possible designs of the second aspect.

### BRIEF DESCRIPTION OF DRAWINGS

FIG. 1 is a schematic composition diagram of an interface according to an embodiment of this application;
FIG. 2 is a schematic diagram of a structure of an electronic device according to an embodiment of this application;
FIG. 3a to FIG. 3c are a schematic diagram of a group of graphical user interfaces according to an embodiment of this application;
FIG. 4A is a schematic diagram of a graphical user interface according to an embodiment of this application;
FIG. 4B is a schematic diagram of a graphical user interface according to an embodiment of this application;
FIG. 4C is a schematic diagram of a graphical user interface according to an embodiment of this application;
FIG. 4D is a schematic diagram of a graphical user interface according to an embodiment of this application;
FIG. 5a and FIG. 5b are a schematic diagram of another group of graphical user interfaces according to an embodiment of this application;
FIG. 6a and FIG. 6b are a schematic diagram of another group of graphical user interfaces according to an embodiment of this application;
FIG. 7a and FIG. 7b are a schematic diagram of another group of graphical user interfaces according to an embodiment of this application;
FIG. 8a to FIG. 8c are a schematic diagram of another group of graphical user interfaces according to an embodiment of this application;
FIG. 9a and FIG. 9b are a schematic diagram of another group of graphical user interfaces according to an embodiment of this application;
FIG. 10a to FIG. 10c are a schematic diagram of another group of graphical user interfaces according to an embodiment of this application;
FIG. 11 is a schematic diagram of a software architecture according to an embodiment of this application;
FIG. 12 is a schematic diagram of a layout of a view tree according to an embodiment of this application;
FIG. 13a and FIG. 13b are a schematic diagram of distribution of view nodes according to an embodiment of this application;
FIG. 14 is a schematic flowchart of a view display method according to an embodiment of this application;
FIG. 15 is a schematic flowchart of another view display method according to an embodiment of this application; and
FIG. 16 is a schematic diagram of a structure of an electronic device according to an embodiment of this application.

### DESCRIPTION OF EMBODIMENTS

The following describes the technical solutions in the embodiments of this application with reference to the accompanying drawings in the embodiments of this application.

It should be noted that the term "and/or" in this specification describes only an association between associated objects and represents that three relationships may exist. For example, A and/or B may represent the following three cases: Only A exists, both A and B exist, and only B exists. In addition, unless otherwise specified, the character "/" in this specification generally indicates an "or" relationship between the associated objects. In the descriptions of the embodiments of this application, terms such as "first" and "second" are only used for distinction and description, but cannot be understood as indication or implication of relative importance, and cannot be understood as an indication or implication of a sequence. In the descriptions of this application, unless otherwise specified, "a plurality of' means two or more than two.

The following describes some terms in the embodiments of this application to help persons skilled in the art have a better understanding.

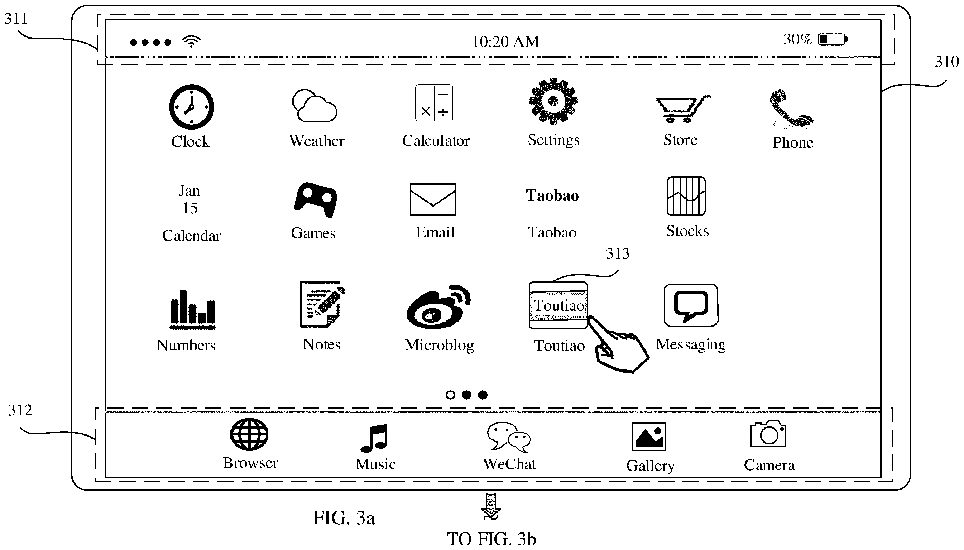

A user interface in the embodiments of this application is a GUI displayed on a display of an electronic device, and includes a home screen (which may also be referred to as a desktop, for example, a home screen 310 shown in FIG. 3a), a leftmost screen display interface, and a display interface of each application (application, APP). An application in the embodiments of this application is a computer program that can implement one or more specific functions. Usually, a plurality of applications may be installed on the electron device, such as a camera application, a messaging application, Microblog, an email application, WeChat (WeChat), Tencent QQ, and DingTalk. The application mentioned below may be an application installed on the electronic device before delivery, or may be an application installed by a user in a process of using the electronic device. This is not limited in the embodiments of this application.

An activity (Activity), a window (Window), and a view (View) in the embodiments of this application are described.

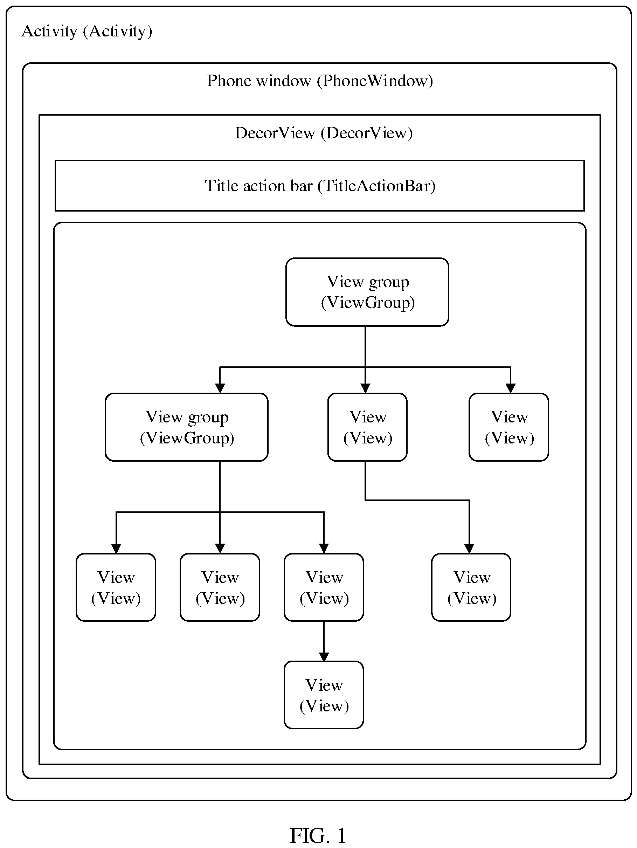

FIG. 1 shows the activity in the embodiments of this application. In an Android system, the activity is used to describe an independent activity of an application. The activity is not an interface, but a carrier of the interface, and the user may draw a user interface on the activity.

A window object is included inside the activity to manage the view. A phone window (PhoneWindow) shown in FIG. 1 is a window of an entire interface. The phone window includes a Decor View and the Decor View is a root view (which is also referred to as a view root) of the entire interface. The view root any be a view or a view group (ViewGroup). The Decor View may further include a title bar (TitleBar) and an action bar (ActionBar). The action bar and the action bar may also be collectively referred to as a title action bar.

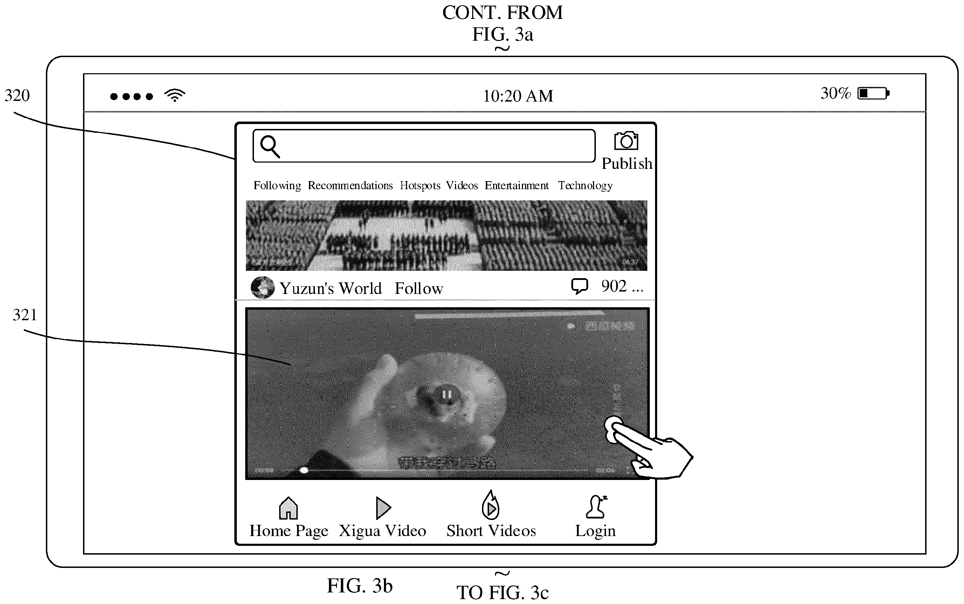

The window (Window) in this application is a carrier of the view (View). The view is a minimum control unit constituting an application interface, and the window is used to display the application interface. Therefore, the view may also be considered as a minimum control unit included in the window. As shown in FIG. 1, all the views included in the window form a view tree in a tree structure. In other words, one window (Window) corresponds to one view tree. The view tree in the embodiments of this application includes one or more views. For a view on the user interface, the view may correspond to one view or one view group in the view tree. For example, a view 321 shown in FIG. 3b corresponds to one view group in the view tree, and the view group may include a plurality of views.

The following describes view separation and view sharing in the embodiments of this application with reference to examples.

For example, the display of the electronic device displays an application window 1. The application window 1 includes a plurality of views, for example, a view A, a view B, and a view C. The application window 1 corresponds to a view tree 1, the view tree 1 may include a plurality of view nodes, and the view A corresponds to a view group 1 in the view tree 1.

The view separation in the embodiments of this application is described by using an example in which the view A is separated from the application window 1. A specific gesture operation may be performed on the view A, so that the electronic device separates the view group 1 corresponding to the view A from the view tree 1 corresponding to the application window 1. In other words, on the user interface, the view A may be separated from the application window 1. Then, the separated view A may be added to a created window 2, and the window 2 may be displayed in a floating manner. In this way, when the user flips through other content in the application window 1 or switches to another application window, content of the view A in the window 2 may be always displayed. In this way, the user may always view the content of the view A.

The view sharing in the embodiments of this application is described by using an example in which the view A is shared from the application window 1 to an application window 2. A specific gesture operation may be performed on the view A, so that the electronic device copies the view group 1 corresponding to the view A, that is, creates a copy of the view group 1 corresponding to the view A, and then adds the copy of the view group 1 to a view tree 2 corresponding to the application window 2. In other words, on the user interface, the view A in the application window 1 is replicated to the application window 2.

The following describes the electronic device, a graphical user interface (graphical user interface, GUI) used for the electronic device, and embodiments for using the electronic device. In some embodiments of this application, the electronic device may be a mobile phone, a tablet computer, a notebook computer, a wearable device (for example, a smart watch or smart glasses) having a wireless communication function, or the like. The electronic device includes a device (for example, a processor, an application processor, an image processor, or another processor) that can implement a data processing function and a device (for example, a display) that can display the user interface. An example embodiment of the electronic device includes but is not limited to a device using iOS@, Android^{®}, Microsoft^{®}, or another operating system. The electronic device may alternatively be another portable device, for example, a laptop (laptop) with a touch-sensitive surface (for example, a touch panel). It should further be understood that in some other embodiments of this application, the electronic device may alternatively be a desktop computer with a touch-sensitive surface (for example, a touch panel), instead of a portable electronic device.

A structure of the electronic device is further described with reference to the accompanying drawings.

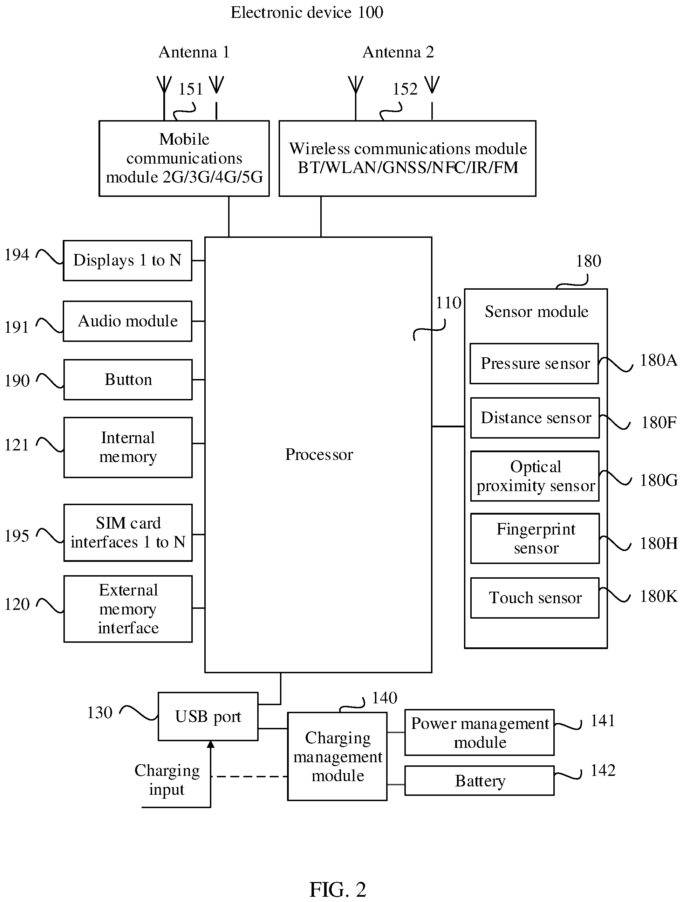

FIG. 2 is only a schematic diagram of a hardware structure of the electronic device according to an embodiment of this application. Based on the hardware structure shown in FIG. 2, another structural modification may further exist. As shown in FIG. 2, an electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 151, a wireless communications module 152, an audio module 191 (including a speaker, a receiver, a microphone, a headset jack, and the like that are not shown in FIG. 2), a sensor module 180, a button 190, a display 194, a subscriber identity module (subscriber identity module, SIM) card interface 195, and the like. The sensor module 180 may include a pressure sensor 180A, a distance sensor 180F, an optical proximity sensor 180G, a fingerprint sensor 180H, a touch sensor 180K, and the like (the electronic device 100 may further include other sensors such as a temperature sensor, an ambient light sensor, a gyro sensor, and the like, which are not shown in FIG. 2).

It may be understood that the structure shown in this embodiment of this application does not constitute a specific limitation on the electronic device 100. In some other embodiments of this application, the electronic device 100 may include more or fewer components than those shown in FIG. 2, or some components may be combined, or some components may be split, or there may be a different component layout. The components shown in FIG. 2 may be implemented by hardware, software, or a combination of software and hardware.

The following describes in detail the components of the electronic device 100 shown in FIG. 2.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution.

The memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory, to avoid repeated access and reduce a waiting time of the processor 110. Therefore, system efficiency can be improved.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The internal memory 121 may be configured to store computer-executable program code. The executable program code includes instructions. The processor 110 runs or executes the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (for example, audio data, a phone book, a web page, a picture, or a text) created during use of the electronic device 100. In addition, the internal memory 121 may include a high-speed random access memory, and may further include a nonvolatile memory, for example, a magnetic disk storage device, a flash memory device, or another nonvolatile solid-state storage device. The internal memory 121 may further store various operating systems such as an IOS^{®} operating system developed by Apple Inc. and an ANDROID^{®} operating system developed by Google Inc.

The following describes a function of the sensor module 180.

The pressure sensor 180A is configured to sense a pressure signal, and may convert the pressure signal into an electrical signal. In some embodiments, the pressure sensor 180A may be disposed on the display 194.

The distance sensor 180F is configured to measure a distance. The electronic device 100 may measure a distance in an infrared or laser manner. In some embodiments, in a photographing scenario, the electronic device 100 may measure a distance by using the distance sensor 180F, to implement quick focusing. In some other embodiments, the electronic device 100 may further detect, by using the distance sensor 180F, whether a person or an object approaches.

The optical proximity sensor 180G may include, for example, a light-emitting diode (LED) and an optical detector, for example a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call. When the electronic device 100 is moved to the ear, the optical proximity sensor may turn off power of the display, to automatically turn off the screen to save the power. The optical proximity sensor 180G may also be used in a smart cover mode or a pocket mode to automatically unlock or lock the screen.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like. In some examples, the fingerprint sensor may be disposed on the back of the electronic device 100 (for example, below a rear-facing camera), or the fingerprint sensor may be disposed on the front of the electronic device 100 (for example, below a touchscreen). In some other examples, the fingerprint sensor may alternatively be disposed in the touchscreen to implement a fingerprint recognition function. To be specific, the fingerprint sensor may be integrated with the touchscreen to implement the fingerprint recognition function of the electronic device 100. In this case, the fingerprint sensor may be disposed in the touchscreen, or may be a part of the touchscreen, or may be disposed in the touchscreen in another manner. In addition, the fingerprint sensor may further be implemented as a full-panel fingerprint sensor. Therefore, the touchscreen may be considered as a panel on which a fingerprint may be collected at any location. In some embodiments, the fingerprint sensor may process the collected fingerprint (for example, verify the collected fingerprint), and send a fingerprint processing result (for example, whether the fingerprint verification succeeds) to the processor 110, and the processor 110 performs corresponding processing based on the fingerprint processing result. In some other embodiments, the fingerprint sensor may further send the collected fingerprint to the processor 110, so that the processor 110 processes the fingerprint (for example, verifies the fingerprint). The fingerprint sensor in this embodiment of this application may use any type of sensing technology, including but not limited to an optical sensing technology, a capacitive sensing technology, a piezoelectric sensing technology, an ultrasonic sensing technology, or the like. In addition, other sensors such as a gyroscope, a barometer, a hygrometer, a thermometer, a movement sensor, and an infrared sensor may further be configured for the electronic device 100. Details are not described herein.

The touch sensor 180K is also referred to as a "touch panel". The touch sensor 180K may be disposed below the display 194, and the touch sensor 180K and the display 194 form a touchscreen, which is also referred to as a "touch screen". The touch sensor 180K is configured to detect a touch operation performed on or near the touch sensor 180K. The touch sensor 180K may transfer the detected touch operation to the application processor, to determine a type of a touch event. The display 194 may provide a visual output related to the touch operation. In some other embodiments, the touch sensor 180K may alternatively be disposed on a surface of the electronic device 100 at a location different from that of the display 194.

For example, when the display (for example, the touchscreen) displays an image, after detecting a touch operation (for example, a tapping operation) on the image, the touch sensor 180K sends the touch operation to the processor 110. The processor 110 determines location coordinates corresponding to the touch operation (for example, when the touchscreen is a capacitive touchscreen, the processor 110 determines, based on a capacitance change, a coordinate location corresponding to the touch operation). In other words, the user taps the location coordinates on the display, and an object corresponding to the location coordinates is an object tapped by the user on the image (or the touch sensor 180K can determine the coordinate location corresponding to the touch operation, and send the touch operation and the coordinate location to the processor 110, and the processor 110 does not need to determine again the coordinate location corresponding to the touch operation).

The display 194 may be configured to display information entered by the user or information provided for the user, and various graphical user interfaces. For example, the display 194 may display a picture, a text, a video, a web page, a file, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLEDs), or the like. In some embodiments, the electronic device 100 may include one or N displays 194, where N is a positive integer greater than 1.

In addition, the electronic device 100 may implement an audio function, for example, music playing or recording, by using the audio module 191 (the speaker, the receiver, the microphone, the headset jack), the processor 110, and the like. The audio module 191 may transmit, to the speaker, an electrical signal converted from received audio data, and the speaker converts the electrical signal into a sound signal for output. In addition, the microphone converts a collected sound signal into an electrical signal, and the audio module receives the electric signal, then converts the electrical signal into audio data, and then outputs the audio data to the wireless communications module 152 to send the audio data to, for example, a terminal, or outputs the audio data to the internal memory 121 for further processing.

A wireless communication function of the electronic device 100 may be implemented through the antenna 1, the antenna 2, the mobile communications module 151, the wireless communications module 152, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communications module 151 may provide a solution, applied to the electronic device 100, to wireless communication including 2G, 3G, 4G, 5G, and the like. The mobile communications module 151 may include at least one filter, a switch, a power amplifier, a low noise amplifier (low noise amplifier, LNA), and the like. The mobile communications module 151 may receive an electromagnetic wave by using the antenna 1, perform processing such as filtering or amplification on the received electromagnetic wave, and transfer the electromagnetic wave to the modem processor for demodulation. The mobile communications module 151 may further amplify a signal modulated by the modem processor, and convert the signal into an electromagnetic wave for radiation through the antenna 1. In some embodiments, at least some function modules of the mobile communications module 151 may be disposed in the processor 110. In some embodiments, at least some function modules of the mobile communications module 151 and at least some modules of the processor 110 may be disposed in a same device.

The modem processor may include a modulator and a demodulator. The modulator is configured to modulate a to-be-sent low-frequency baseband signal into a medium or high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio module (which is not limited to the speaker, the receiver, or the like), or displays an image or a video through the display 194. In some embodiments, the modem processor may be an independent device. In some other embodiments, the modem processor may be independent of the processor 110, and is disposed in a same device as the mobile communications module 151 or another function module.

The wireless communications module 152 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 152 may be one or more devices integrating at least one communications processing module. The wireless communications module 152 receives an electromagnetic wave through the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, and convert the signal into an electromagnetic wave for radiation through the antenna 2.

The electronic device 100 may further include a peripheral interface, configured to provide various interfaces for an external input/output device (for example, a keyboard, a mouse, an external display, an external memory, or a subscriber identity module card). For example, the electronic device 100 is connected to the mouse through the universal serial bus (USB) port 130, and is connected to a SIM card provided by an operator through a metal contact on a card slot of the subscriber identity module card. The peripheral interface may be configured to couple the external input/output peripheral device to the processor 110 and the internal memory 121.

The electronic device 100 may further include a charging management module 140 (for example, the battery 142 and the power management module 141) that supplies power to each component. The battery 141 may be logically connected to the processor 110 by using the power management module 141, to implement functions such as charging management, discharging management, and power consumption management by using the charging management module 140.

The electronic device 100 may receive an input of the button 190, and generate a key signal input related to a user setting and function control of the electronic device 100. The SIM card interface 195 in the electronic device 100 is configured to connect to a SIM card. The SIM card may be inserted into the SIM card interface 195 or removed from the SIM card interface 195, to implement contact with or separation from the electronic device 100.

Although not shown in FIG. 2, the electronic device 100 may further include a camera, for example, a front-facing camera or a rear-facing camera. The electronic device 100 may further include a motor, configured to generate a vibration prompt (for example, an incoming call vibration prompt). The electronic device 100 may further include an indicator, for example, an indicator light, configured to indicate a charging state or a battery change, or may be configured to indicate a message, a missed call, a notification, or the like. The electronic device 100 may further include a Bluetooth apparatus, a positioning apparatus, a flash, a miniature projection apparatus, a near field communication (near field communication, NFC) apparatus, and the like. Details are not described herein.

The following embodiments may be all implemented by the electronic device 100 having the foregoing hardware structure.

An embodiment of this application provides a view display method. An electronic device may separate or copy a view in a window of an application A from the window of the application A, and separately display the view in a window B. When a user flips through other content in the window of the application A, or switches to a window of another application, the user may always view content of the view, so that a requirement of the user for separately displaying view content that the user is interested in may be met, and user experience is improved.

To meet the requirement of the user for separately displaying the view content that the user is interested in, the following embodiments provide two possible implementations. One possible implementation is view separation. The view separation is separating a view that needs to be separated from a window of an application and separately displaying the view in another window. The original window does not include the view before and after the separation. The other possible implementation is view sharing. A view that needs to be separated is copied from a window of an application to another window. The window of the original application still includes the view.

The view display method provided in this embodiment of this application may be applied to a plurality of scenarios. Scenario 1, Scenario 2, and Scenario 3 are used to describe a view separation process, and Scenario 4 is used to describe a view sharing process. The following describes, with reference to the accompanying drawings, the scenarios to which the view display method is applicable.

Scenario 1: a scenario of separating and displaying a video view. The user of the electronic device 100 wants to watch a video in the application A (for example, a Toutiao application), and also needs to perform an operation on a window of an application B (for example, a messaging application). In this case, a view group corresponding to the video in the application A may be separated from a view tree corresponding to the application A for display. Then, the application B is switched to, but the video may still be displayed in a floating manner and played on the display 194 of the electronic device 100.

For ease of understanding, in the following embodiments of this application, the electronic device 100 having the structure shown in FIG. 2 is used as an example, to specifically describe, with reference to the accompanying drawings, the view display method in Scenario 1 provided in the embodiments of this application.

FIG. 3a to FIG. 3c are a schematic diagram of a group of graphical user interfaces according to an embodiment of this application.

FIG. 3a shows a GLJI of the electronic device 100, and the GUI is a home screen 310 of the mobile phone. The home screen 310 may include a status bar 311 and icons of various applications, including an icon of a clock application, an icon of a setting application, and an icon 313 of the Toutiao application. The status bar 311 may include a Wi-Fi icon, time, a remaining battery level (for example, 30%), and the like. The home screen 310 may further include a Dock bar 312, and the Dock bar 312 may include an icon of a frequently used application, for example, an icon of a browser application, an icon of a music application, an icon of a WeChat application, an icon of a gallery application, or an icon of a camera application.

For example, when detecting an operation (for example, tapping) performed on the icon 313 of the Toutiao application on the home screen 310, the electronic device 100 displays, in response to the operation, another GUI shown in FIG. 3b. The GUI includes a window 320, and the window 320 includes a plurality of views, such as a view 321.

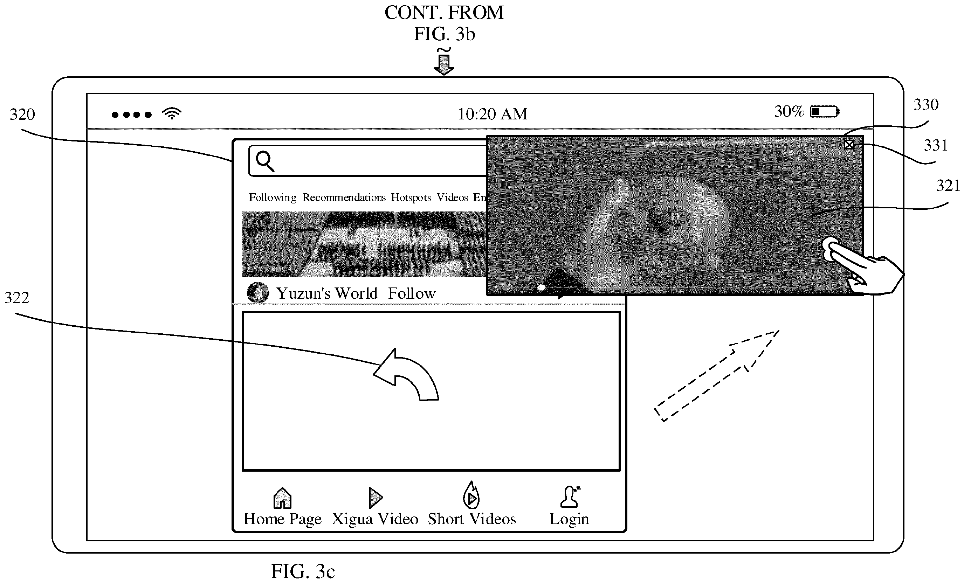

When detecting an operation (for example, two-finger pressing) performed on the view 321 in the window 320, the electronic device 100 displays, in response to the operation, another GUI shown in FIG. 3c. The GUI includes a window 320 and a window 330, and the view 321 is displayed in the window 330. The operation performed on the view 321 in the window 320 is not limited to a two-finger pressing gesture, and may alternatively be a single-finger pressure-sensitive screen pressing gesture, single-finger touching and holding, or the like. This is not limited herein.

A difference between the window 320 shown in FIG. 3c and the window 320 shown in FIG. 3b lies in that: The window 320 shown in FIG. 3b includes the view 321. The window 320 shown in FIG. 3c does not include the view 321, but a control 322 is displayed at a location corresponding to the view 321 in the window 320 shown in FIG. 3b, and the control 322 is configured to listen to an operation of restoring the view 321.

In some other embodiments, when the electronic device 100 detects the operation (for example, the two-finger pressing) performed on the view 321 in the window 320, the electronic device 100 may further display a view separation option in response to the operation. Then, the electronic device 100 separates the view 321 from the window 320 in response to an operation performed on the view separation option, and adds the separated first view 321 to the created window 330.

The user may perform an operation on the electronic device 100 to restore the view 321 separated from the window 320 to the window 320. In some examples, the user may perform an operation on the control 322, and the electronic device may restore the view 321 to the window 320. For example, when detecting an operation (for example, tapping) performed on the control 322, the electronic device 100 displays, in response to the operation, the GUI shown in FIG. 3b. To be specific, the window 330 on the GUI shown in FIG. 3c is not displayed, and the view 321 is displayed in the window 320.

In some other examples, the window 330 further includes a control 331, configured to listen to an operation of closing the window 330. The user may perform an operation (for example, tapping) on the control 331 in the window 330 to restore the view 321 to the window 320. For example, when detecting the operation (for example, the tapping) performed on the control 331, the electronic device 100 displays, in response to the operation, the GUI shown in FIG. 3b. To be specific, the window 330 on the GUI shown in FIG. 3c is not displayed, and the view 321 is displayed in the window 320.

When the view 321 is separated from a window of the Toutiao application and displayed in the window 330, the electronic device 100 may display the window 330 in a floating manner, so that the view 321 may be always displayed.

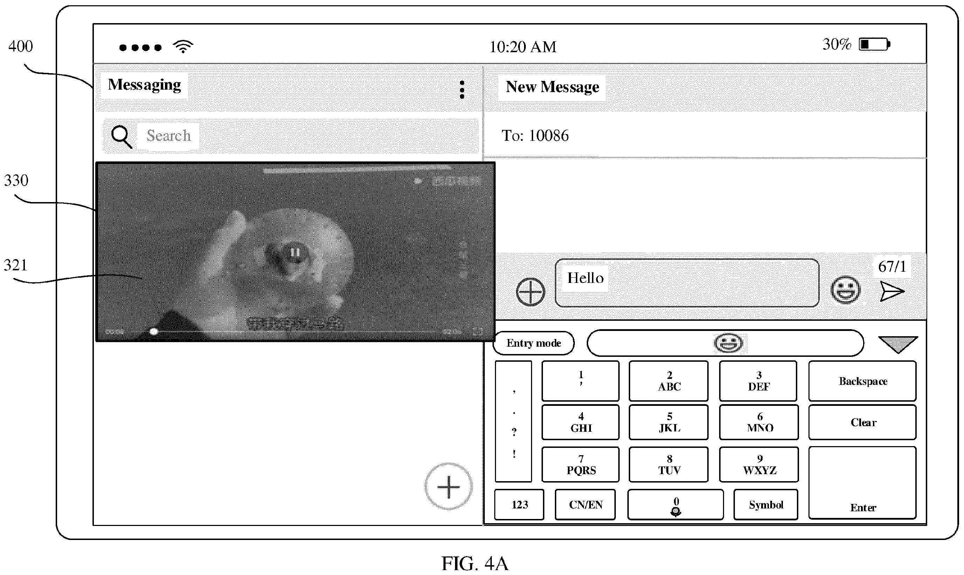

When the window 330 is displayed, the user may perform an operation (for example, flipping up or flipping down) on the window 320, to flip through other content in the Toutiao application. Certainly, the user may alternatively perform an operation on the electronic device 100, for example, perform a tapping operation on a Home button of the electronic device 100, to return to the home screen 310. Then, the user performs an operation on an icon of an application other than the Toutiao application on the home screen 310, to open an interface of the application on which the operation is performed. For example, when detecting an operation (for example, tapping) performed on an icon of the messaging application, the electronic device 100 displays, in response to the operation, a GUI shown in FIG. 4A. An SMS message chat interface 400 and the window 330 are displayed on the GUI, and the view 321 is displayed in the window 330. The user of the electronic device 100 may perform an operation on the SMS message chat interface 400, for example, type a text in a chat text box, when watching a video in the view 321.

In some other embodiments, when an operation used for view separation is performed on a view in a window, the electronic device 100 may display different windows in a split-screen manner in response to the operation, for example, display the original window in a first region of the display, and display, in a second region of the display, a window including the separated view. In this way, the two windows are located in two different regions, and the two windows do not block each other, so that the user can view the two windows at the same time.

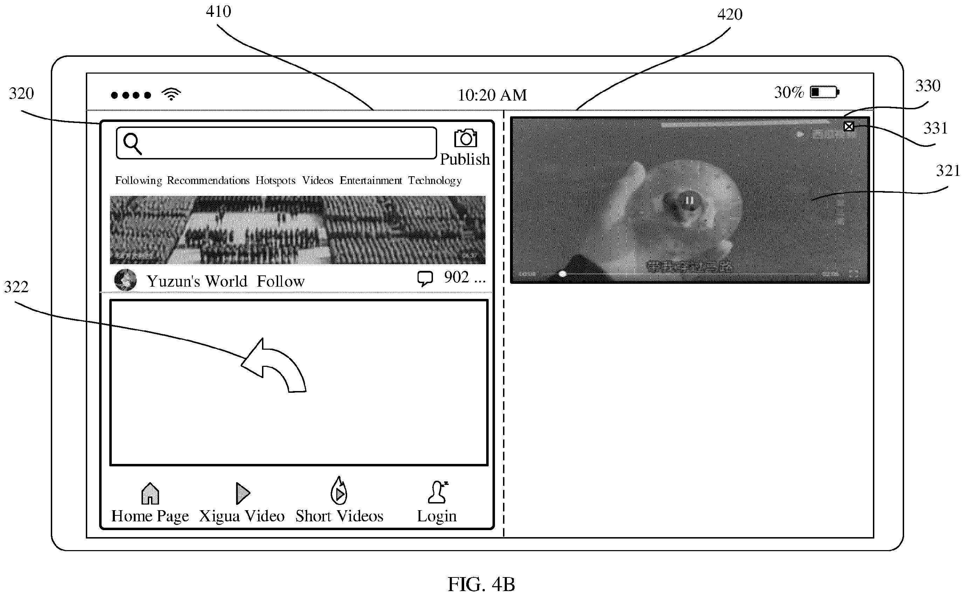

For example, the electronic device 100 displays the GUI shown in FIG. 3b, and the GUI includes the window 320. When detecting the operation (for example, the two-finger pressing) performed on the view 321 in the window 320, the electronic device 100 displays, in response to the operation, the window 320 in a first region 410 shown in FIG. 4B, and displays the window 330 in a second region 420. The window 320 does not include the view 321, and the view 321 is displayed in the window 330. For related content of the window 320 and the window 330, refer to descriptions of the related content in FIG. 3b and FIG. 3c. Details are not described herein again.

In some other embodiments, when an operation used for view separation is performed on a view in a window, the electronic device 100 may display different windows in a split-screen manner in response to the operation, for example, display a home screen in a first region, and display, in a second region, a window including the separated view.

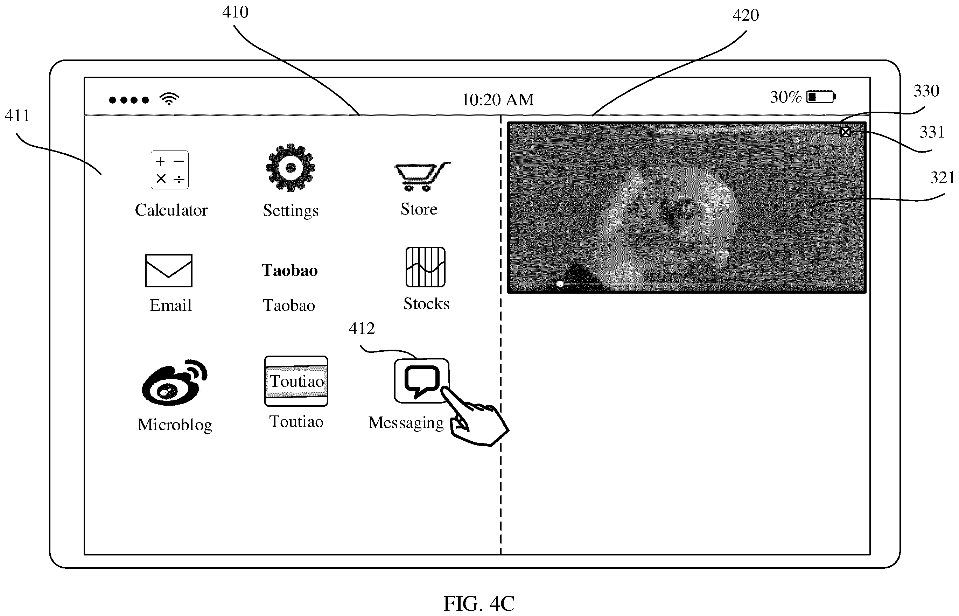

For example, the electronic device 100 displays the GUI shown in FIG. 3b, and the GUI includes the window 320. When detecting the operation (for example, the two-finger pressing) performed on the view 321 in the window 320, in response to the operation, the electronic device 100 displays a home screen 411 in a first region 410 shown in FIG. 4C, where the home screen 411 may include icons of a plurality of applications; displays the window 330 in a second region 420; and closes the window 320, or runs the Toutiao application in a background. For related content of the window 330, refer to the descriptions of the related content in FIG. 3c. Details are not described herein again.

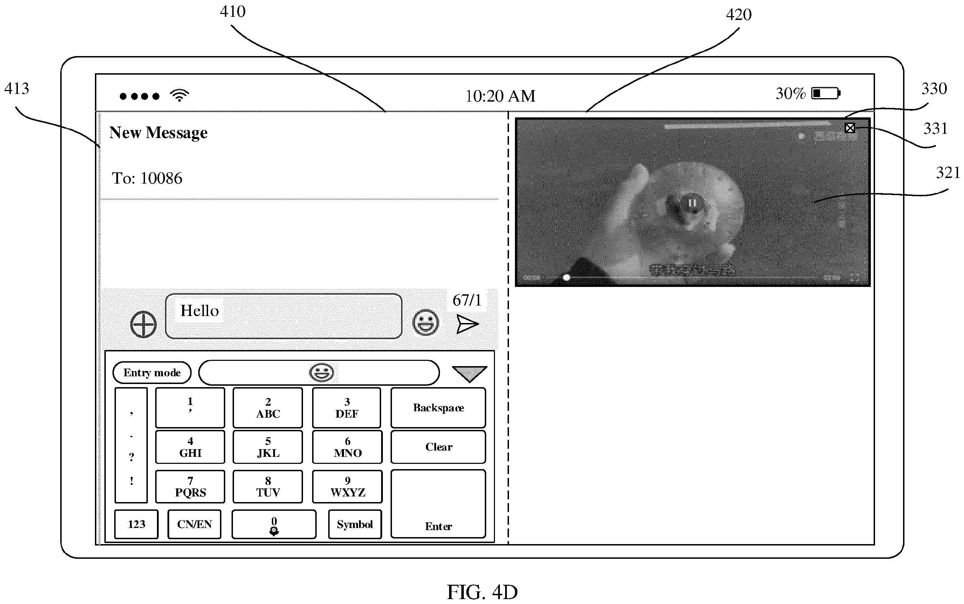

Further, an operation may further be performed on the icon of the application on the home screen 411 shown in FIG. 4C, to start the application. Refer to FIG. 4C and FIG. 4D. When detecting that a tapping operation is performed on an icon 412 of the messaging application in the first region 410 shown in FIG. 4C, the mobile phone displays, in response to the operation, an SMS message editing interface 413 in the first region 410 shown in FIG. 4D. In this way, the user can edit an SMS message in the first region when watching a video view in the window 430.

It may be understood that the examples shown in FIG. 3a to FIG. 3c and FIG. 4Ato FIG. 4D are described by using an example in which the electronic device 100 is a large-screen device. The embodiments of this application may also be implemented in a scenario of a foldable-screen device or a multi-screen device. For example, a video on a primary screen may be separated to a secondary screen for display, and another application may be switched to and displayed on the primary screen for operation.

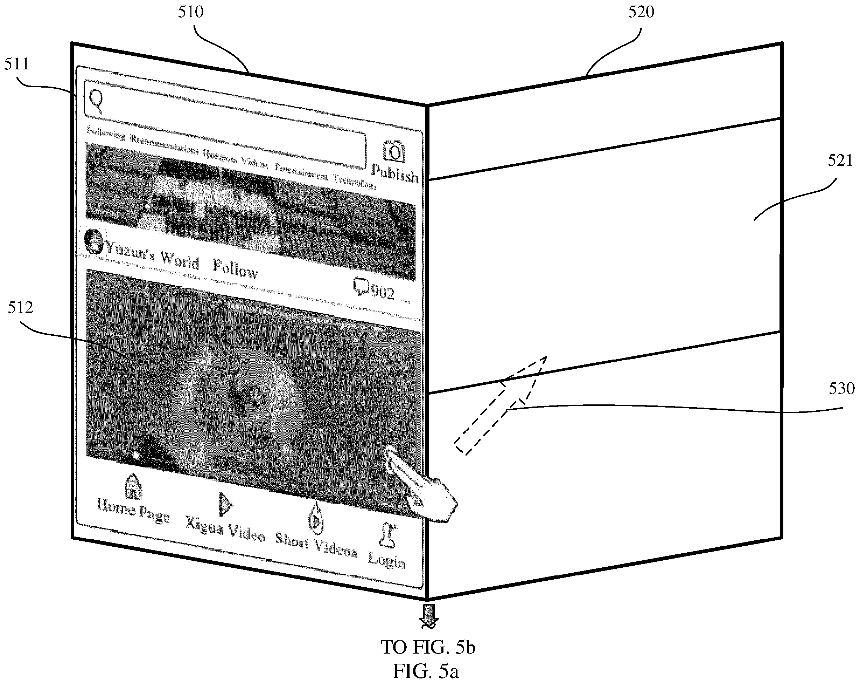

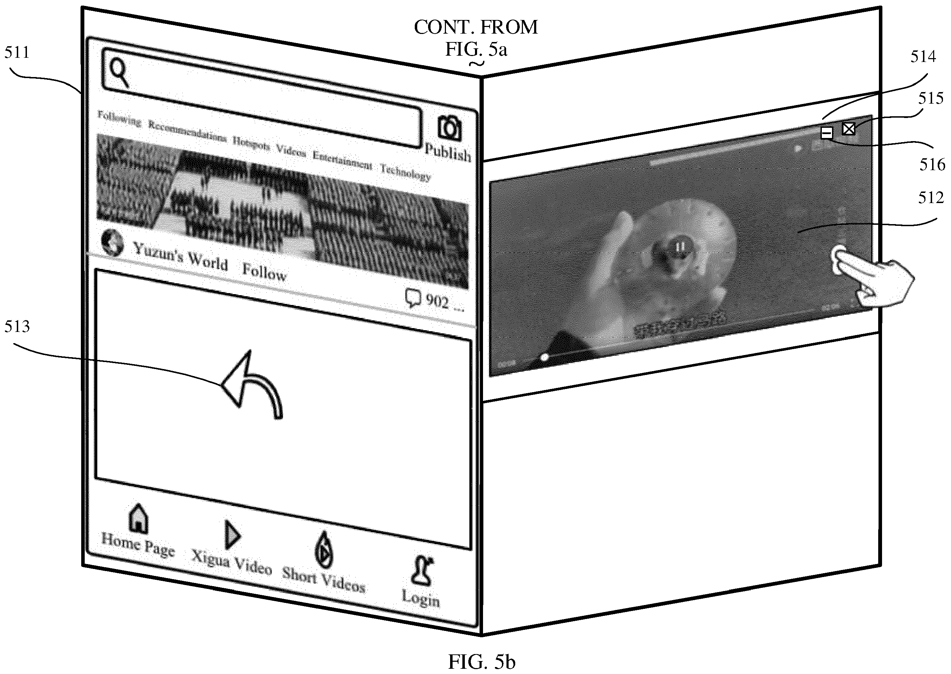

FIG. 5a and FIG. 5b are a schematic diagram of another group of graphical user interfaces according to an embodiment of this application.

As shown in FIG. 5a, the electronic device 100 is a foldable-screen device, and includes a primary screen 510 and a secondary screen 520. The primary screen 510 displays a window 511 of a Toutiao application, a view 512 is displayed in the window 511, and a video is displayed on the view 512. The secondary screen 520 includes a display region 521, and no content is displayed in the display region 521.

The user may perform an operation, for example, two-finger pressing, on the view 512, to display the view 512 in a window 514, and may drag the window 514 to the secondary screen 520 in a direction of a dashed arrow 530. In other words, the view 512 is separated from the window 511 of the primary screen 510, and the separated view 512 is displayed on the secondary screen 520. For example, when detecting the operation (for example, the two-finger pressing) performed on the view 512, the electronic device 100 displays the new window 514 in response to the operation, and the view 512 is displayed in the window 514.

When the window 514 displaying the view 512 is dragged to the secondary screen 520 for display, the electronic device 100 displays a GUI shown in FIG. 5b. On the GUI, a control 513 is displayed in the window 511 displayed on the primary screen 510, and the control 513 may listen to an operation used to restore a separated view to an original window. The view 512 is not displayed in the window 511 of the primary screen 510, and the view 512 is displayed in the display region 521 of the secondary screen 520.

By using the example shown in FIG. 5a and FIG 5b, the electronic device 100 may separate a view (the view 512) of a video in the Toutiao application from a window (the window 511) of the Toutiao application, and display the separated view 512 in another created window (the window 514). In this way, when other content in the Toutiao application is flipped through on the primary screen 510, or when an application on the primary screen 510 is switched, the view 512 may be always displayed in the created window.

Optionally, an operation may be performed on the electronic device 100 to restore the view 512 to the window 511. In some examples, the electronic device 100 may restore the view 512 to the window 511 in response to the user tapping the control 513 in the window 511, and delete the window 514 and the control 513 in the window 511. In some other examples, refer to FIG. 5b. The window 514 may further include a control 515. The electronic device 100 may close the window 514 in response to the user tapping the control 515 in the window 514, display the view 512 in the window 511, and deletes the control 513.

Refer to FIG. 5b, the window 514 may further include a control 516. The electronic device 100 may minimize the window 514 in response to an operation performed on the control 516, and when the user needs to view content in the window 514, the window 514 is maximized.

In this embodiment of this application, an application window and a view separated from the application window may be displayed on the foldable-screen device or the multi-screen device in a split-screen manner. Generally, the user usually performs an operation on the primary screen. Therefore, the separated view may be displayed on the secondary screen, and the user continues to flip through, on the primary screen, other content other than the separated view.

In the foregoing embodiments, an example of separating the video view is used for description. It should be understood that in the embodiments of this application, a view that can be separated is not limited to the video view, and may alternatively be a text view, a picture view, a chat box view, a web page view, or the like.

The following describes a view separation and display process with reference to Scenario 2 by using a picture view as an example

Scenario 2: a scenario of separating and displaying the picture view. The user of the electronic device 100 wants to edit, in the application B, a text on a picture in the application A (for example, a Toutiao application), and send the text to a friend. In this scenario, the user needs to perform an operation on a window of the application B (for example, a messaging application) when viewing the text on the picture. In this case, a view group corresponding to the picture in the application A may be separated from a view tree corresponding to the application A, and separately displayed in a new window. Then the application B is started. The picture may still remain displayed on the display 194 of the electronic device 100 in a floating manner.

For ease of understanding, in the following embodiments of this application, the electronic device 100 having the structure shown in FIG. 2 is used as an example, to specifically describe, with reference to the accompanying drawings, the view display method in Scenario 2 provided in the embodiments of this application.

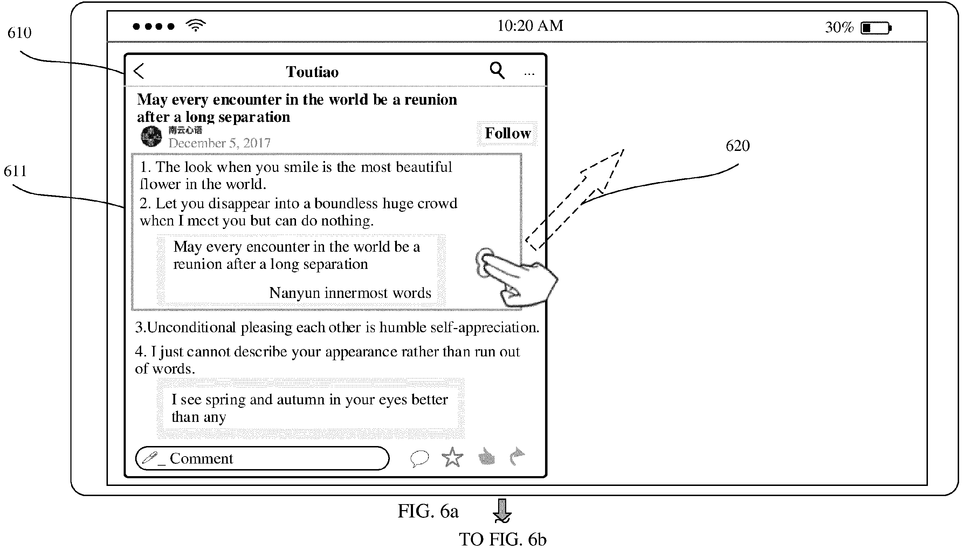

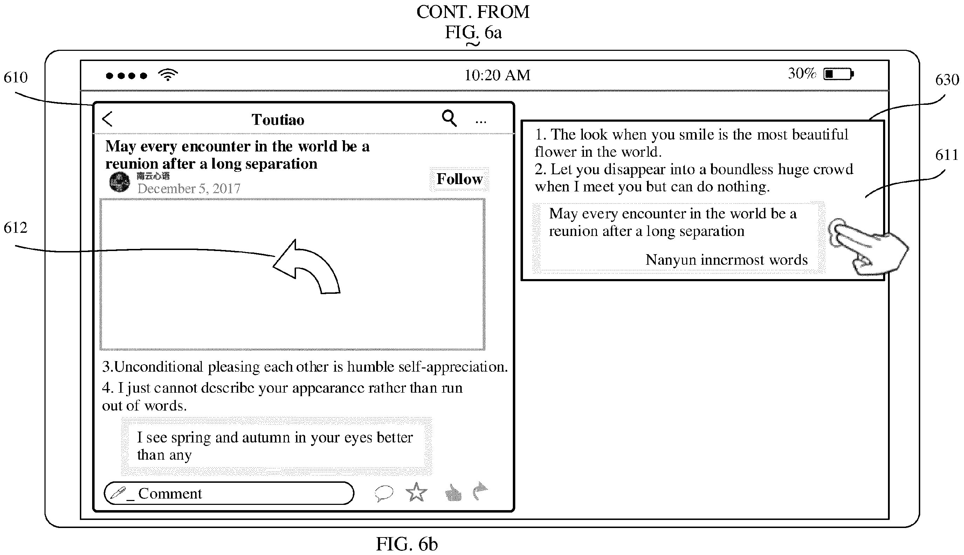

FIG. 6a and FIG. 6b are a schematic diagram of another group of graphical user interfaces according to an embodiment of this application.

FIG. 6a shows a GUI of the electronic device 100. The GUI includes a window 610 of the Toutiao application, and the window 610 may include a text view and a picture view. A picture view 611 shown in FIG. 6a includes text content such as "The look when you smile is the most beautiful flower in the world", "Let you disappear into a boundless huge crowd when I meet you but can do nothing", and "May every encounter in the world be a reunion after a long separation".

When the user of the electronic device 100 wants to send the text content "May every encounter in the world be a reunion after a long separation" in the picture view 611 to the friend, the picture view 611 may be separately separated for display.

When detecting an operation (for example, two-finger pressing) performed on the picture view 611 in the window 610, the electronic device 100 creates a window 630 in response to the operation, and the picture view 611 is displayed in the window 630. The electronic device 100 may display, in response to an operation of dragging the picture view 611 by the user (for example, in a direction of a dashed arrow 620), another GUI shown in FIG. 6b. The GUI includes a window 610 and the window 630, and the picture view 611 is displayed in the window 630.

A difference between the window 610 shown in FIG. 6b and the window 610 shown in FIG. 6a lies in that: The window 610 shown in FIG. 6a includes the picture view 611. The window 610 shown in FIG. 6b does not include the picture view 611, but includes a control 612 displayed in the window 610 shown in FIG. 6b. The control 612 is configured to listen to an operation of restoring the picture view 611. For example, on the GUI shown in FIG. 6b, when detecting an operation of tapping the control 612, the electronic device 100 displays the picture view 611 in the window 610 in response to the operation. To be specific, when the user taps the control 612, the electronic device 100 may restore the picture view 611 in the window 630 to the window 610.

In the example shown in FIG. 6a and FIG. 6b, the user may drag the window 630 to any display region of the display 194. As shown in FIG. 6b, the window 630 is displayed on the right side of the display 194, and the picture view 611 is displayed in the window 630.

When the picture view 611 is separately displayed on the display 194 of the electronic device 100, a social application may be started, and the text content "May every encounter in the world be a reunion after a long separation" in the picture view 611 is edited in the social application.

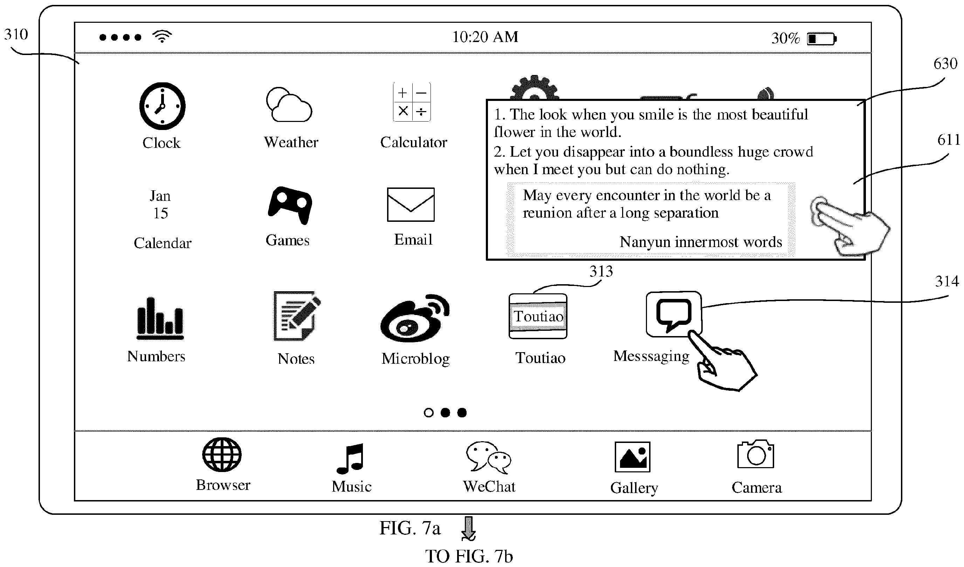

The GUI shown in FIG. 6b is used as an example. A window of the messaging application may be displayed in a plurality of manners. In a possible implementation, the home screen 310 shown in FIG. 3a may be first returned, and the window 630 is always displayed when the home screen 310 is displayed. The messaging application is started by performing a tapping operation on an icon of the messaging application on the home screen 310, to display the home screen 310 and the window 630 shown in FIG. 7a. In an example, a close button on the window 610 of the Toutiao application is tapped, to close the window 610 of the Toutiao application, and display the home screen 310 and the window 630 shown in FIG. 7a. In another example, a Home button on the electronic device 100 is tapped to return to the home screen 310. In still another example, a floating dock is displayed on the display of the electronic device 100, and the home screen 310 may be returned by tapping the floating dock. In another implementation, when the messaging application already runs in a background, a flicking operation may be performed on the Home button of the electronic device 100 to display a plurality of floating application windows running in the background, and a floating window of the messaging application may be found by flicking left or right on the display. The window of the messaging application is selected to display the window of the messaging application on the display. This is not limited in this embodiment of this application.

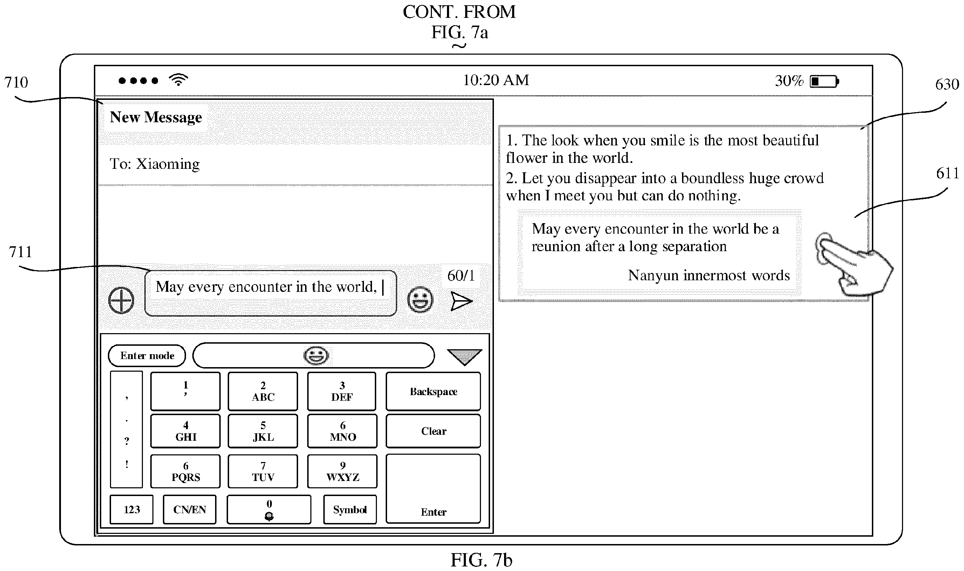

In FIG. 7a, an example in which the electronic device 100 displays the home screen 310 and the window 630 is used. When detecting an operation performed on an icon 314 of the messaging application, the electronic device 100 displays the window of the messaging application in response to the operation, and then may display a window 710 of an SMS message editing interface shown in FIG. 7b after a series of operations are performed. The window 710 includes a text box 711. The window 630 is displayed on the right side of the display 194, and the user may type, in the text box 711, "May every encounter in the world be a reunion after a long separation", and send the text to "Xiao Ming".

Scenario 3: a scenario of separating and displaying overlapping views. An application may have overlapping views. A specific gesture (for example, two-finger pressing) may be used to separate two overlapping views for display. For ease of understanding, in the following embodiments of this application, the electronic device 100 having the structure shown in FIG. 2 is used as an example, to specifically describe, with reference to the accompanying drawings, the view display method in Scenario 3 provided in the embodiments of this application.

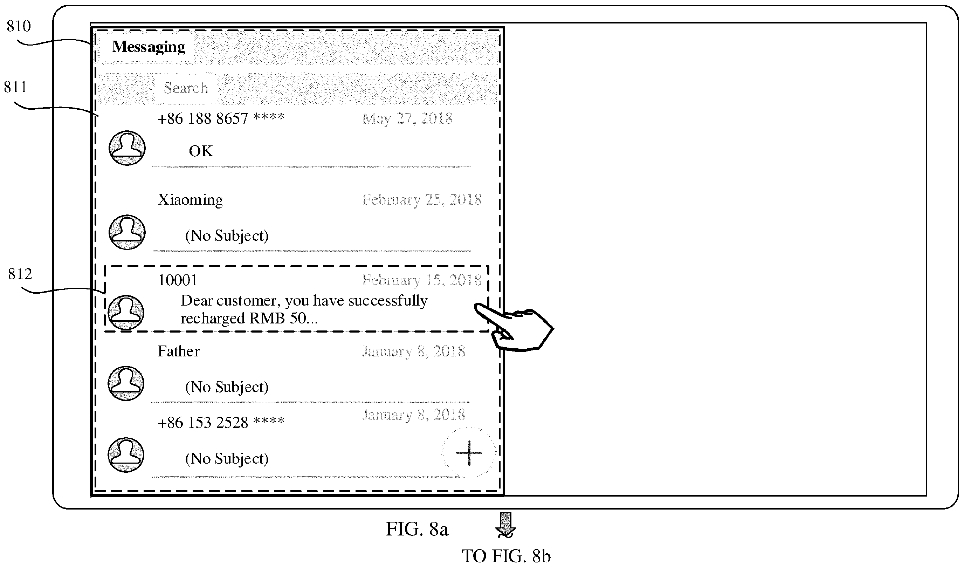

FIG. 8a to FIG. 8c are a schematic diagram of another group of graphical user interfaces according to an embodiment of this application.

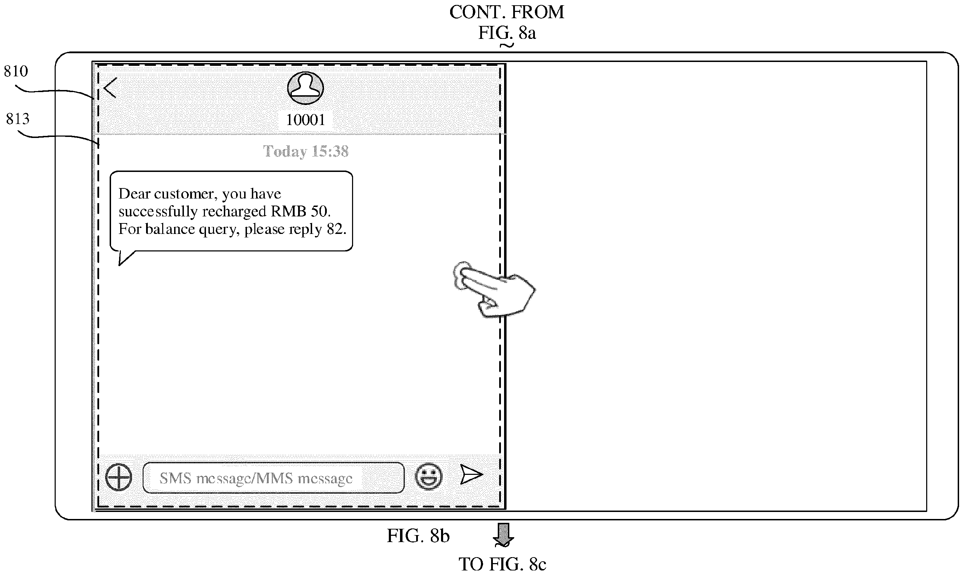

FIG. 8a shows a GUI of the electronic device 100. The GUI includes a window 810 of a messaging application, and the window 810 includes a view 811. A dialog list of dialogs with a plurality of contacts is displayed on the view 811, and a contact identifier in the dialog list may be a phone number (for example, 10001, +861889657^{∗∗∗∗}, or +861532528^{∗∗∗∗}), a name (for example, Xiao Ming), a nickname (for example, Dad), or the like. A region in which the contact identifier in the dialog list is located is tapped to open a dialog details page of a dialog with a contact. For example, when detecting an operation (for example, tapping) performed on the region in which the contact identifier in the dialog list is located (for example, a region in which the phone number 10001 marked by a dashed box 812 is located), the electronic device 100 may display, in response to the operation, a GUI shown in FIG. 8b. The GUI includes the window 810, the window 810 includes a view 813, and a dialog details page of a dialog with a contact whose contact identifier is 10001 is displayed on the view 813. The view 813 is displayed in the window 810 shown in FIG. 8b, and the window 810 further includes the view 811. Because the view 813 is stacked on the view 811, that is, the view 813 blocks content of the view 811, only the view 813 is displayed in the window 810 displayed on the display 194 of the electronic device 100, and the user can view only the view 813 in the window 810.

To enable the user to view the content in the view 811 and content in the view 813, the stacked view 811 and view 813 may be separated for display. The following uses an example in which the view 813 located at an upper layer is separated from the window 810 for description.

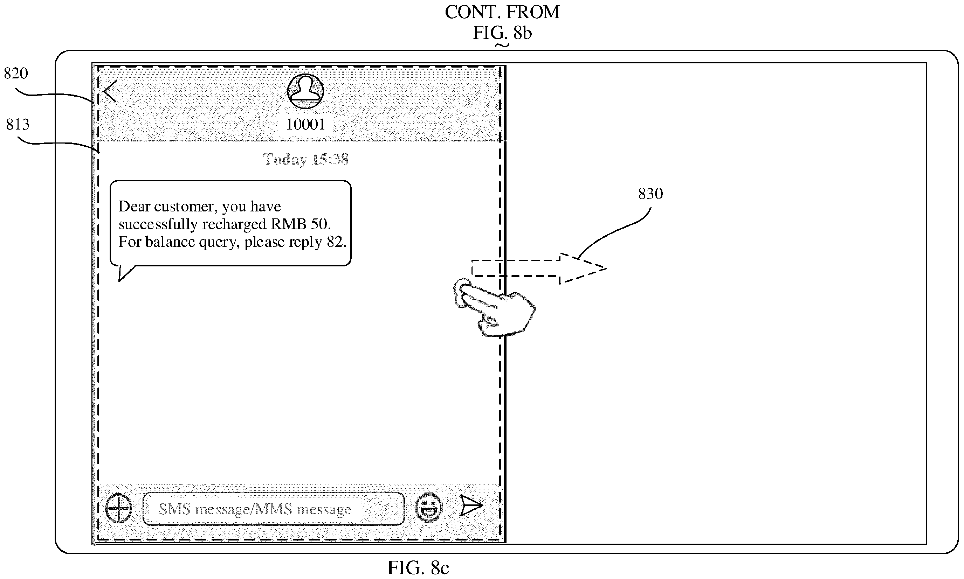

The user may perform an operation on the window 810 shown in FIG. 8b, to separate the stacked view 811 and view 813. For example, when detecting an operation (for example, two-finger pressing) performed on the view 813, the electronic device 100 displays a GUI shown in FIG. 8c. A created window 820 is displayed on the GUI, and the view 813 is displayed in the window 820. The window 810 is located at a lower layer of the window 820 shown in FIG. 8c, and the window 810 includes the view 811 but does not include the view 813. The user may separate the view 813 in the window 810 by performing the two-finger pressing operation, to display the view 813 in the created window 820.

On the GUI shown in FIG. 8c, the user can view only the window 820, and cannot view the window 810 stacked at the lower layer of the window 820. To view both the window 810 and the window 820 on the display, the user may move the window 820 stacked on the window 810.

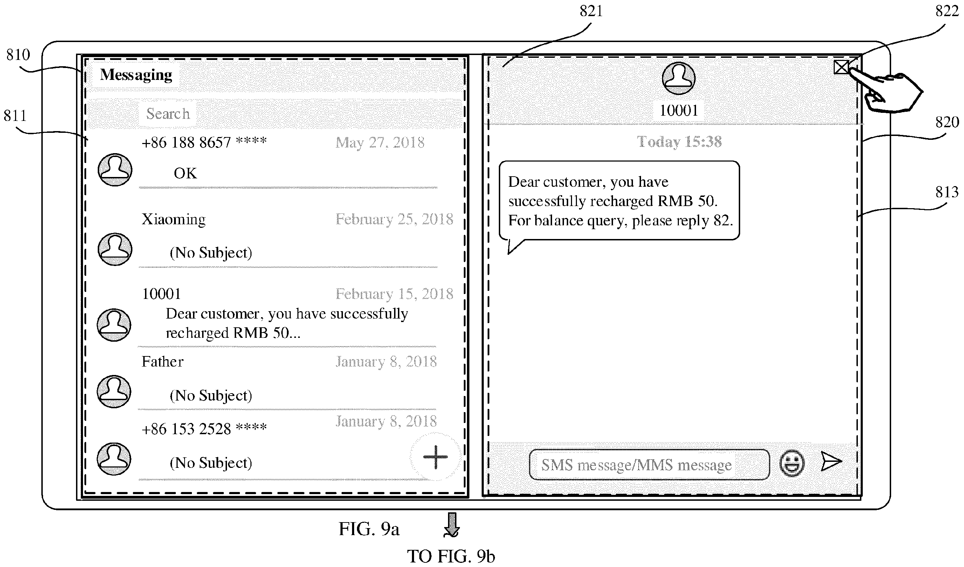

For example, when detecting an operation (a drag operation along a dashed arrow 830) performed on the window 820 shown in FIG. 8c, the electronic device 100 displays, in response to the operation, a GUI shown in FIG. 9a. The window 810 and the window 820 are displayed on the GUI, the view 811 is displayed in the window 810, and the view 813 is displayed in the window 820.

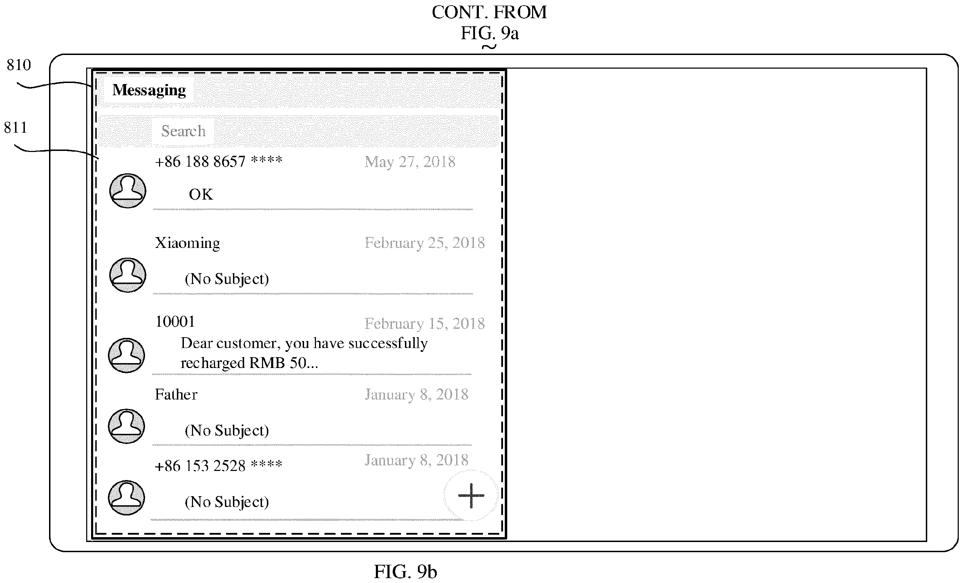

The window 820 shown in FIG. 9a may further include a control 821, and the control 821 is configured to listen to an operation of returning to a previous page. For example, when detecting an operation (for example, tapping) performed on the control 821, the electronic device 100 displays, in response to the operation, a GUI shown in FIG. 9b. The GUI includes the window 810, and the window 810 includes only the view 811, and does not include the view 813. In other words, the control 821 in the view 813 is tapped to return to the view 811 at an upper level.

The window 820 shown in FIG. 9a may further include a control 822, and the control 822 may listen to an operation used to restore a view in a window. The electronic device 100 may close the window 820 in response to an operation of tapping the control 822 by the user, and restore the view 813 to the window 810 for display. For example, when detecting the operation (for example, tapping) performed on the control 822, the electronic device 100 displays, in response to the operation, the GUI shown in FIG. 8b. The GUI includes the window 810, the view 813 is displayed in the window 810, and the window 810 further includes the view 811. Because the view 813 is stacked on the view 811, that is, the view 813 blocks the content of the view 811, only the view 813 is displayed in the window 810 displayed on the display 194 of the electronic device 100.

In the embodiments of Scenario 1, Scenario 2, and Scenario 3, a window in a form of a view may be displayed on the display, to meet a requirement of the user for separately displaying view content, that the user is interested in, in an application window. The foregoing embodiments may be applied to a common-screen device, and may also be applied to a large-screen device and a foldable-screen device. For example, the foregoing embodiments are applied to a large-screen device, and two windows may be both displayed on a screen by using an advantage of a large display area of the large-screen device. In this way, the window of the application A and the window including the view separated from the window of the application A may be both displayed. Alternatively, the window of the application B and the window including the view separated from the window of the application A are both displayed. For another example, the foregoing embodiments are applied to a foldable-screen device, and two windows may be both displayed by using a split-screen display feature of the foldable-screen device. For example, the window of the application A is displayed on a primary screen, and the window including the view separated from the window of the application A is displayed on a secondary screen. For another example, the window of the application B is displayed on a primary screen, and the window including the view separated from the window of the application A is displayed on a secondary screen. In this way, a large-screen advantage of the large-screen device and a dual-screen advantage of the foldable-screen device can be fully used.

The following describes a view sharing process with reference to Scenario 4.

Scenario 4: a view sharing scenario. A Tmall application is used as an example. A plurality of commodity views are displayed in the Tmall application. When the user wants to share a commodity view in the Tmall application with a notes application, the user may copy the view in the Tmall application, and share a copy, generated through copying, of the view to a window of the notes application.

For ease of understanding, in the following embodiments of this application, the electronic device 100 having the structure shown in FIG. 2 is used as an example, to specifically describe, with reference to the accompanying drawings 10a to 10c, the view display method in Scenario 4 provided in an embodiment of this application.

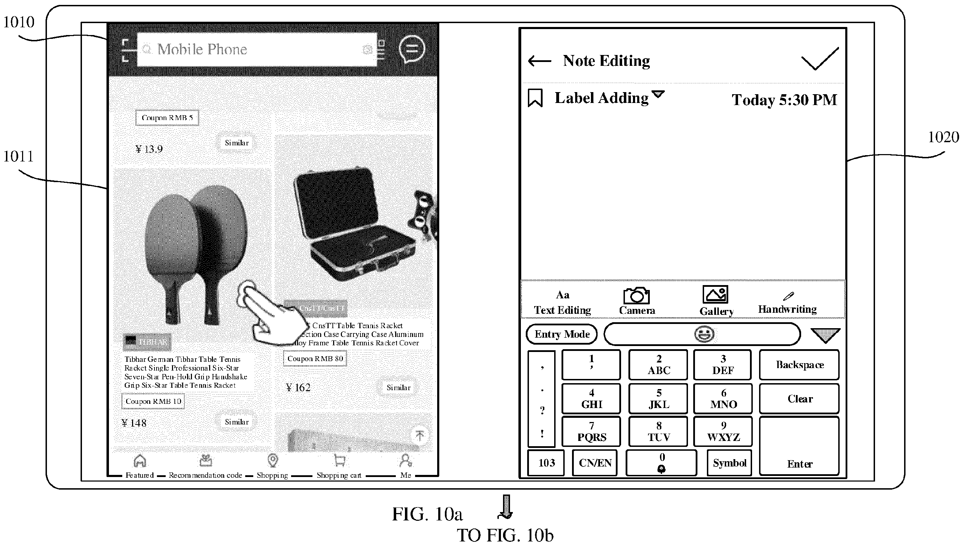

FIG. 10a to FIG. 10c are a schematic diagram of another group of graphical user interfaces according to an embodiment of this application.

FIG. 10a shows a GUI of the electronic device 100. The GUI includes a window 1010 of the Tmall application and a window 1020 of the notes application. The window 1010 includes a plurality of commodity views, and a text or a commodity picture is displayed in the commodity view. For example, the commodity view is a view 1011, and the view 1011 includes a text and a picture of table tennis rackets.

The following describes in detail an implementation process of sharing the view in the window 1010 of the Tmall application to the window 1020 of the notes application.

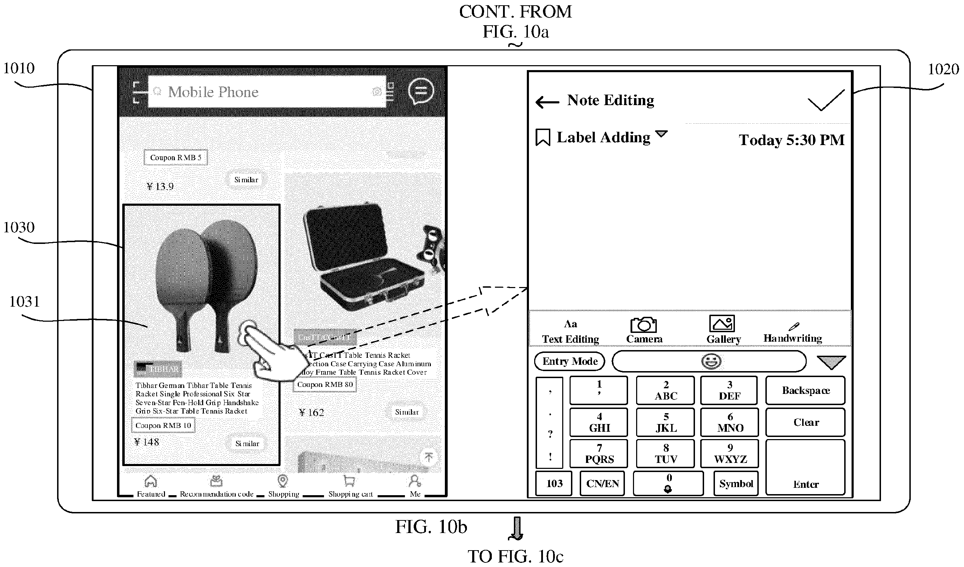

For example, as shown in FIG. 10a, when detecting an operation (for example, two-finger pressing) performed on the view 1011, the electronic device 100 displays, in response to the operation, a window 1030 shown in FIG. 10b. A view 1031 is displayed in the window 1030, and the view 1031 is a copy of the view 1011.

In some other embodiments, when the electronic device 100 detects the operation (for example, the two-finger pressing) performed on the view 1011, the electronic device 100 may further display a view sharing option in response to the operation. Then, the electronic device 100 replicates the view 1011 in the window 1020 in response to an operation performed on the view sharing option, to obtain the view 1031 (where the view 1031 is the copy of the view 1011), and then adds the view 1031 to the window 1030.

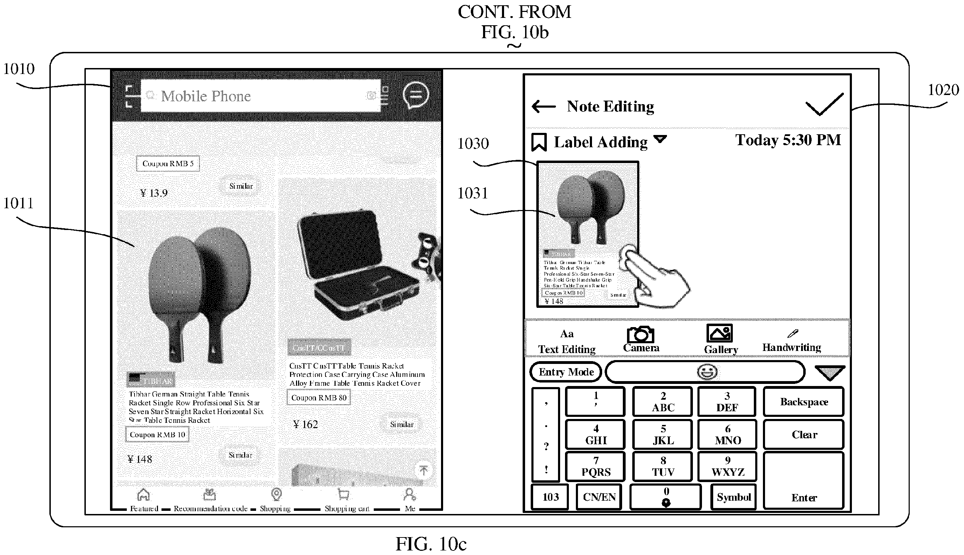

As shown in FIG. 10b, when detecting an operation (a drag operation in a direction of a dashed arrow) performed on the window 1030, the electronic device moves, in response to the operation, the window 1030 to a region in which the window 1020 is located. The window 1010, the window 1020, and the window 1030 are displayed on a GUI shown in FIG. 10c. The window 1030 is stacked on the window 1020, the window 1010 includes the view 1011, and the window 1030 includes the view 1031.

In some other embodiments, the view 1031 in the window 1030 shown in FIG. 10 may further be added to the window 1020. In other words, the view 1031 is cut out from the window 1030 and pasted into the window 1020. In this way, in addition to an original view corresponding to the original notes application, the window 1020 further includes the view 1031 stacked on the original view.

In Scenario 4, an example in which a view (shared from the window of the Tmall application to the window of the notes application) is shared between windows of two different applications is used for description. It should be understood that a view may alternatively be shared between two different windows of a same application, or a view may be shared in windows on different screens.

It should be noted that an operation of triggering the view separation and an operation of triggering the view sharing in the foregoing embodiments may be triggered by using different gestures, or may be triggered by using a same gesture. When different gestures are used for triggering, for example, the operation of triggering the view separation may be triggered by using a two-finger pressing gesture, and the operation of triggering the view sharing may be triggered by using a single-finger touching and holding gesture. When a same gesture (for example, two-finger pressing) is used for triggering, the electronic device 100 may display a prompt box when detecting the two-finger pressing operation performed on a to-be-operated view. The prompt box includes two function options: the view separation and the view sharing. When the user taps the view separation function option, the electronic device 100 performs the view separation process. When the user taps the view sharing function option, the electronic device 100 performs the view sharing process.

Based on the hardware structure shown in FIG. 2, the following is an example of a schematic diagram of a software architecture according to this application.

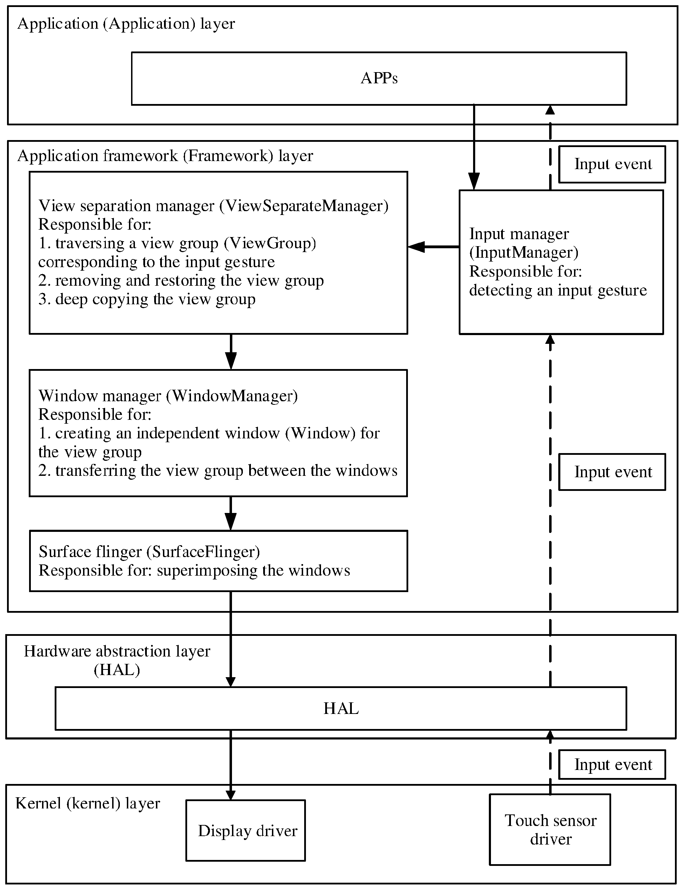

FIG. 11 is the schematic diagram of the software architecture according to this application. In FIG. 11, for example, the electronic device 100 is a mobile phone, and an Android system is used as an example. As shown in FIG. 11, a software architecture of the electronic device 100 mainly includes four layers, and sequentially includes a kernel (kernel) layer, a hardware abstraction layer (hardware abstraction layer, HAL), an application framework (Framework) layer, and an application (Application) layer from bottom to top.

The kernel layer mainly includes a driver of an input/output device. The output device may include a display, a speaker, and the like. The input device may include a sensor (for example, a touch sensor), a keyboard, a microphone, and the like. The input device at the kernel layer may collect an input event of a user, and then send, by using the hardware abstraction layer, the input event to an upper layer (namely, the application framework layer) for processing. For example, FIG. 11 shows only a touch sensor driver and a display driver, but drivers included in the kernel layer is not limited to the touch sensor driver and the display driver.

The hardware abstraction layer is used to provide the framework layer with a general-purpose interface for invoking the driver at the kernel layer, and distribute the input event sent by the kernel layer to the upper layer, namely, the application framework layer.

The application framework layer mainly includes an input manager (InputManager), a window manager (WindowManager), a view separation manager (ViewSeparateManager), and a surface flinger (SurfaceFlinger).

The input manager may be responsible for detecting an input gesture corresponding to the input event. When the kernel layer sends the input event to the application framework layer through the hardware abstraction layer, the input manager may determine whether the input gesture is a gesture used for view separation or a gesture used for view sharing, and then send a detection result of the input gesture to the view separation manager and the upper layer (namely, the application layer).

For example, the input manager is configured to: listen to the input event of the user; monitor, in real time, the input gesture corresponding to the input event; and transfer coordinates (x, y) corresponding to the input event and the input event to the view separation manager. When monitoring the input gesture, the input manager invokes a function ViewSeparateManager.separateAt(int x, inty), where the function is used to find a view group at an uppermost layer corresponding to a location of the coordinates (x, y); pop up a dialog box to ask the user to select the view separation or the view sharing; and send a result to the view separation manager.

The view separation manager is configured to: when it is determined that the input gesture is the gesture used for view separation, invoke a ViewGroup.getParent().RemoveView(this) function, and remove a view group that is in a view tree and that corresponds to a to-be-operated view from the view tree; and when it is determined that the input gesture is the gesture used for view sharing, invoke a ViewSeparateManager.deapCopy(ViewGroup) function to copy a view group that is in a view tree and that corresponds to a to-be-operated view.

The window manager is configured to: invoke WindowManager.addView() to create an independent window for the separated or copied view group (namely, the view group corresponding to the to-be-operated view), and add the separated view group to the created window.

The surface flinger is configured to: superimpose the created window with another window, synthesize a GUI based on superimposed windows, and then send the synthesized GUI to the display driver at the kernel layer through the hardware abstraction layer, to drive the display 194 to display the GUI.

The application layer includes various applications, such as WeChat, Taobao, Messaging, Tencent QQ, Camera, and Microblog. Each application at the application layer may determine how to display a display interface.

With reference to the software system architecture of the electronic device 100 shown in FIG. 11, the following describes a specific view separation and display manner by using Scenario 1 as an example.

Content of an Android (Android) application is a view tree (View Tree) including a view (View). The window 320 of the Toutiao application in FIG. 3b is used as an example to describe distribution of views corresponding to the window 320.

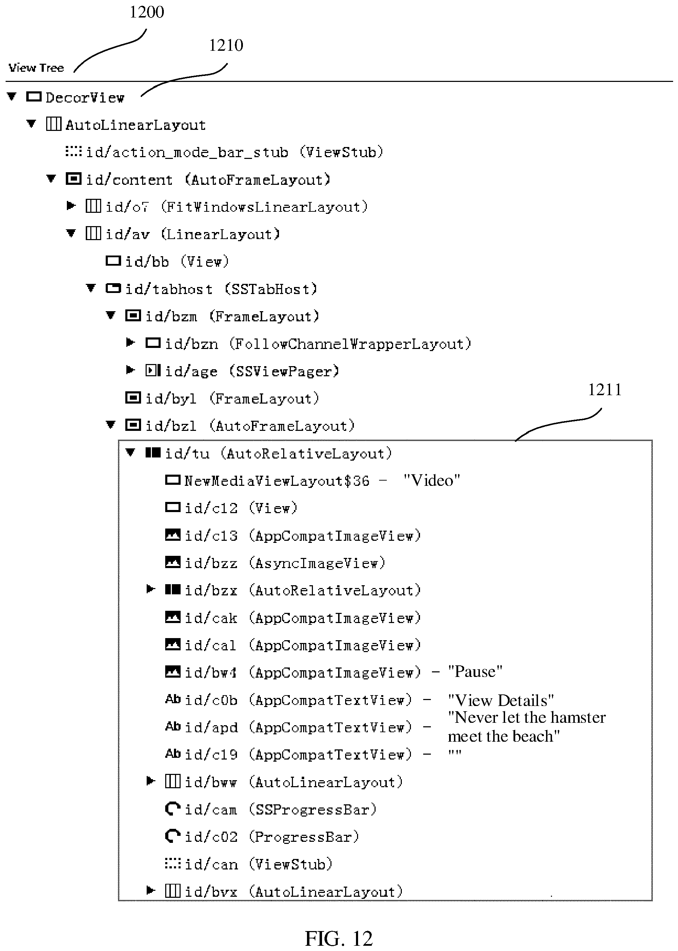

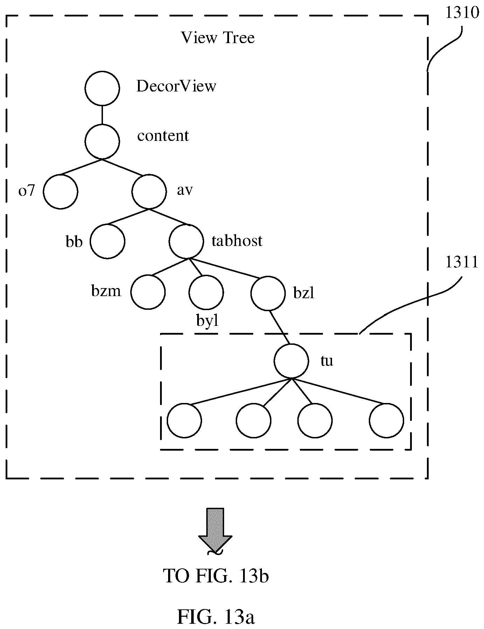

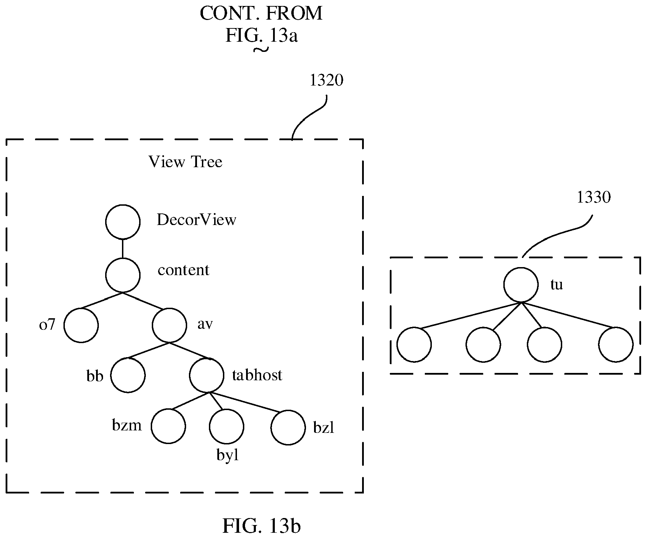

A view tree including views included in the window 320 of the Toutiao application shown in FIG. 3b is shown in FIG. 12. FIG. 13 is a schematic diagram of distribution of nodes of the view tree corresponding to the window 320.

For the view tree including the views in the window 320 of the Toutiao application shown in FIG. 3b, refer to a view tree (View Tree) 1200 shown in FIG. 12. The view tree 1200 includes one DecorView (DecorView) 1210 and subnodes at levels. The view 321 in the window 320 corresponds to a tu node 1211 in the view tree 1200 in FIG. 11, and the tu node 1211 corresponds to a tu subnode 1311 in a view tree 1310 shown in FIG. 13a. When the view 321 is separated from the window 320, in the view tree 1310 shown in FIG. 13a, the tu subnode 1311 is separated from the view tree 1310. Refer to FIG. 13b. The original view tree View Tree 1310 becomes a view tree 1320, and the tu subnode 1311 becomes a view tree 1330.

The following describes a process of separating the view 321 in the window 320 shown in FIG. 3b and FIG. 3c with reference to the software architecture shown in FIG. 11.

When the touch sensor driver sends a detected input event (for example, the detected two-finger pressing gesture operation performed on the interface shown in FIG. 3b or detected location coordinates) to the application framework layer through the hardware abstraction layer. When monitoring an input gesture, the input manager (InputManager) at the application framework layer may analyze whether the input gesture is a gesture used for view separation or a gesture used for view sharing. The input manager compares location coordinates in the input event with stored coordinates of a touch region, to determine a touch region corresponding to the input event, and then reports the input event and the touch region corresponding to the input event to the Toutiao application at the application layer.

The Toutiao application delivers an operation instruction to the input manager in response to the input event. The operation instruction carries content displayed in different regions. In other words, the Toutiao application indicates what content needs to be displayed on a user interface.

The input manager is further configured to: invoke a function ViewSeparateManager.separateAt(int x, inty), and transfer a coordinate point (x, y), the input event, and the operation instruction that is delivered by the upper layer, to the view separation manager (ViewSeparateManager).

For example, the input gesture is a gesture used for view separation. The operation instruction received by the view separation manager is a view separation instruction. The view separation manager invokes a ViewSeparateManager.separateSelect() function to mark, as being in a selected state, a view group (for example, the sub-view tree 1211 shown in FIG. 12) at an uppermost layer at the coordinate point (x, y); invokes a function ViewGroup.getParent().remove(this) to separate the selected view group (for example, the sub-view tree 1211 in FIG. 12, corresponding to the view 321 shown in FIG. 3b) from an original view tree (for example, the view tree 1200 in FIG. 12, corresponding to the window 320 shown in FIG. 3b); and generates a restore control (for example, the control 322) in the window 320, to implement a function of restoring the separated sub-view tree 1211 to the view tree 1200.

The window manager invokes WindowManager.addView() to create a window (for example, the window 330 shown in FIG. 3c), and adds the separated view group to the created window. The created window is displayed as a floating window.

The window manager synthesizes the window 320 and the window 330 into one GUI, and sends the synthesized GUI to the surface flinger. The surface flinger delivers the synthesized GUI to the display driver through the hardware abstraction layer, to drive the display 194 to display the GUI shown in FIG. 3c.

In the foregoing process, the electronic device 100 implements a process of switching from the GUI shown in FIG. 3b to the GUI shown in FIG. 3c. Content in an application window is separated and displayed in a form of a view. The user may display, in a floating manner, only a part of view content that the user is interested in, and may still display the part of view content in the floating manner when an application is switched, so that a more customized display manner is provided for the user, and user experience is improved.

With reference to FIG. 10a to FIG. 10c and the software system architecture of the electronic device 100 shown in FIG. 11, the following describes a specific view sharing manner by using Scenario 4 as an example.

When the touch sensor driver sends a detected input event (for example, the detected two-finger pressing gesture operation performed on the interface shown in FIG. 10a or detected location coordinates) to the application framework layer through the hardware abstraction layer. When monitoring an input gesture, the input manager (InputManager) at the application framework layer may analyze whether the input gesture is a gesture used for view separation or a gesture used for view sharing. The input manager compares the location coordinates in the input event with stored coordinates of a touch region, to determine a touch region corresponding to the input event, and then reports the input event and the touch region corresponding to the input event to the Tmall application at the application layer. For example, the input gesture shown in FIG. 10a is a gesture used for view sharing.

The Tmall application delivers an operation instruction to the input manager in response to the input event. The operation instruction carries content displayed in different regions. In other words, the Tmall application indicates what content needs to be displayed on a user interface.

The input manager is further configured to: invoke a function ViewSeparateManager.separateAt(int x, inty), and transfer a coordinate point (x, y), the input event, and the operation instruction that is delivered by the upper layer, to the view separation manager (ViewSeparateManager).

The operation instruction received by the view separation manager is a view sharing instruction. The view separation manager invokes a function ViewSeparateManager.separateSelect() to mark, as being in a selected state, a view group (for example, the sub-view tree 1211 in FIG. 12) at an uppermost layer at the coordinate point (x, y), and invokes a function ViewSeparateManager.deapCopy(ViewGroup) to deep copy the selected view group, to obtain a copy of the selected view group. For example, a selected view is the view 1011 in the window 1010, and the view 1011 is copied to obtain the view 1031.

The window manager invokes WindowManager.addView() to create a window (for example, the window 1030), and adds the copied view group to the created window. The created window is displayed as a floating window. For example, the window manager adds the view 1031 to the created window 1030. When the user drags the created window 1030 to a region in which an editable view in the window 1020 of the notes application is located, the window manager adds a view group corresponding to the view 1031 in the window 1030 to an Edit View node in a view tree corresponding to the window 1020. In this way, the view 1031 in the window 1030 can be added to the window 1020, and the window 1030 can be deleted. Optionally, a copying manner in this embodiment of this application may be implemented as an inter-process memory sharing manner, a socket (socket) transmission manner, a manner of serializing to a file, or another manner, but is not limited to these manners.

The window manager synthesizes the window 1010 and the window 1020 into one GUI, and sends the synthesized GUI to the surface flinger. The surface flinger delivers the synthesized GUI to the display driver through the hardware abstraction layer, to drive the display 194 to display the GUI shown in FIG. 3c.

In the foregoing process, the electronic device 100 implements a process of switching from the GUI shown in FIG. 10a to the GUI shown in FIG. 10c. In this process, copying is performed between two windows in a form of a view, and a copy protocol does not need to be specifically formulated between the two windows, to provide a compatibility method for sharing content between different windows.

The embodiments in this application may be used in combination, or may be used separately.

With reference to the foregoing embodiments and related accompanying drawings, the embodiments of this application provide a view display method. The method is applicable to an electronic device, and the electronic device may be a mobile phone, a pad, a notebook computer, or the like. The method is applicable to Scenario 1, Scenario 2, and Scenario 3.

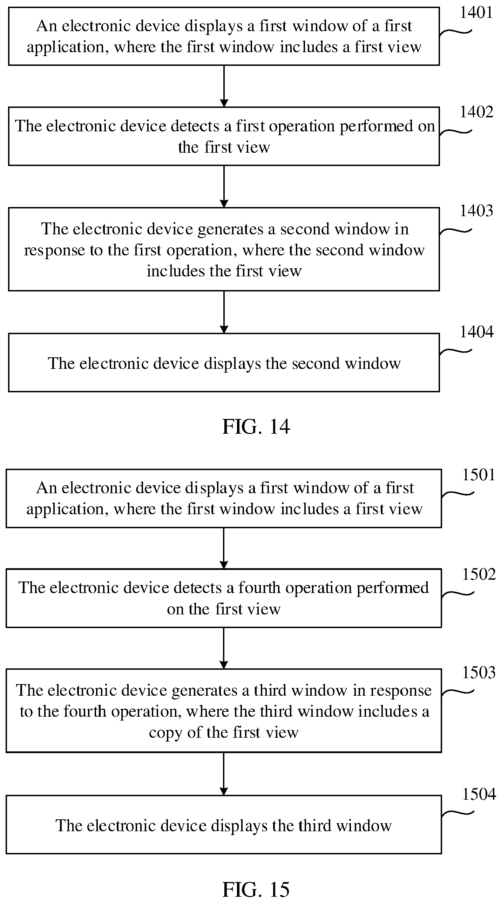

FIG. 14 is a schematic flowchart of the view display method according to an embodiment of this application. As shown in FIG. 14, a procedure of the method includes the following steps:

Step 1401: The electronic device displays a first window of a first application, where the first window includes a first view, and the first view is one of minimum control units included in the first window.

For example, the first application is a Toutiao application. The first window is the window 320 shown in FIG. 3b, and the first view is the view 321.

Step 1402: The electronic device detects a first operation performed on the first view.

For example, the first application is the Toutiao application. The first operation may be an operation of pressing the view 321 shown in FIG. 3b by a user with two fingers.

Step 1403: The electronic device generates a second window in response to the first operation, where the second window includes the first view.

Step 1404: The electronic device displays the second window.

For example, the first application is the Toutiao application. The second window may be the window 330 shown in FIG. 3c, and the window 330 includes the view 321.

Optionally, the electronic device may display the second window in a floating manner, and a size of the second window is smaller than a size of the first window.

In a possible implementation, the first window corresponds to a first view tree, and the first view tree includes a first sub-view tree corresponding to the first view. Separating the first view from the first window may be implemented in the following manner: The first sub-view tree is separated from the first view tree, and the first view is separated from the first window.

For example, the first application is the Toutiao application. The first view tree may be the view tree 1310 shown in FIG. 13a, and the first sub-view tree included in the first view may be a sub-view tree 1311. After the first sub-view tree is separated from the first view tree, the first sub-view tree may be the sub-view tree 1330 shown in FIG. 13b, and the first view tree may be the view tree 1320.

In a possible implementation, after step 1403, the electronic device may further generate a restore control in the first window, and restore the first view to the first window in response to a third operation performed on the restore control.

For example, the first application is the Toutiao application. The restore control may be the view 322 shown in FIG. 3c.

In a possible implementation, after step 1403, the electronic device may further display the first window in a first region, and display the second window in a second region. The first region does not overlap the second region.

For example, the first application is the Toutiao application. The first region may be the region 410 shown in FIG. 4B, and the first window displayed in the first region may be the window 320 shown in FIG. 4B. The second region may be the region 420 shown in FIG. 4B, and the second window displayed in the second region may be the window 330 shown in FIG. 4B.

In a possible implementation, the electronic device may further display a window of a second application, and the second window is stacked on the window of the second application.

For example, the first application is the Toutiao application, and the second application is a messaging application. The window of the second application may be a window in which the SMS message chat interface 400 shown in FIG. 4A is located.

With reference to the foregoing embodiments and related accompanying drawings, the embodiments of this application further provide a view display method. The method is applicable to an electronic device, and the electronic device may be a mobile phone, a pad, a notebook computer, or the like. The method is applicable to Scenario 4.

FIG. 15 is a schematic flowchart of the view display method according to an embodiment of this application. As shown in FIG. 15, a procedure of the method includes the following steps:

Step 1501: An electronic device displays a first window of a first application, where the first window includes a first view, and the first view is one of minimum control units included in the first window.

For example, the first application is a Tmall application. The first window is the window 1010 shown in FIG. 10a, and the first view is the view 1011.

Step 1502: The electronic device detects a fourth operation performed on the first view.

For example, the first application is the Tmall application. The first operation may be an operation of pressing the view 1011 shown in FIG. 10a by a user with two fingers.

Step 1503: The electronic device generates a third window in response to the fourth operation, where the third window includes a copy of the first view.

In a manner in which step 1503 can be implemented, the electronic device may display a view sharing option in response to the fourth operation; replicate the first view in the first window in response to a fifth operation performed on the view sharing option, to obtain the copy of the first view; and add the copy of the first view to the third window. For example, the first window corresponds to a first view tree, and the first view tree includes a first sub-view tree corresponding to the first view. The first sub-view tree in the first view tree is replicated to obtain a copy of the first sub-view tree, and the first view in the first window is replicated to obtain the copy of the first view. The copy of the first sub-view tree is added to a third view tree corresponding to the third window.

Step 1504: The electronic device displays the third window. Optionally, the electronic device may display the third window in a floating manner, and a size of the third window is smaller than a size of the first window.

For example, the first application is the Toutiao application. The third window may be the window 1030 shown in FIG. 10b, the window 1030 includes the view 1031, and the view 1031 is a copy of the view 1011.

In a possible implementation, the electronic device may further display a window of a second application, and the third window is stacked on the window of the second application.

For example, the first application is the Tmall application, and the second application is a notes application. The window of the second application may be the window 1020 shown in FIG. 10c, and the third window may be the window 1030 shown in FIG. 10c.

In another possible implementation, the electronic device may further display the window of the second application. After displaying the third window, the electronic device may further add the copy of the first view in the third window to the window of the second application, and delete the third window.

In the foregoing embodiments provided in this application, the method provided in the embodiments of this application is described from a perspective in which the electronic device (for example, the mobile phone, the pad, or the notebook computer) serves as an execution body. To implement functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by the hardware structure, the software module, or the combination of the hardware structure and the software module depends on a specific application and a design constraint condition of the technical solutions.

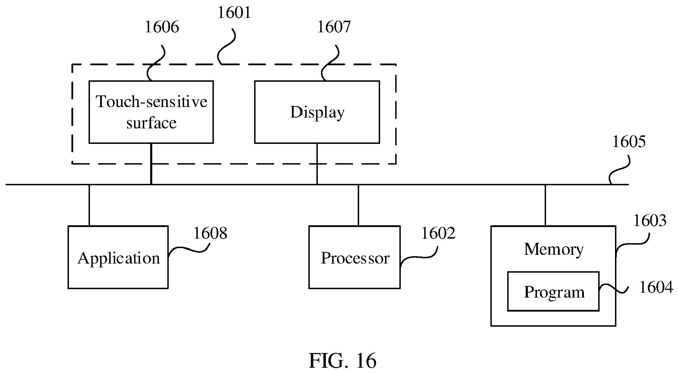

As shown in FIG. 16, some other embodiments of this application disclose an electronic device. For example, the electronic device may be a mobile phone, a pad, or a notebook computer. The electronic device may include: a touchscreen 1601, where the touchscreen 1601 includes a touch-sensitive surface 1606 and a display 1607; an application 1608; one or more processors 1602; and one or more memories 1603, configured to store one or more programs 1604. The foregoing components may be connected through one or more communications buses 1605. The display 1607 may be configured to display a display interface of an application on the electronic device. Alternatively, the display 1607 may further be configured to display a desktop (namely, a home screen) of the electronic device. Alternatively, the display 1607 may be configured to display an image and the like.

When the one or more programs 1604 stored in the memory 1603 are executed by the one or more processors 1602, the electronic device may be configured to perform the steps in FIG. 14 or FIG. 15 and the corresponding embodiments.

According to the context, the term "when" used in the foregoing embodiments may be interpreted as a meaning of "if', "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When the software is used to implement the embodiments, all or some of the embodiments may be implemented in a form of a program product. The program product includes one or more computer instructions. When the program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

For a purpose of explanation, the foregoing description is described with reference to a specific embodiment. However, the foregoing example discussion is not intended to be detailed, and is not intended to limit this application to a disclosed precise form. Based on the foregoing teaching content, many modification forms and variation forms are possible. Embodiments are selected and described to fully illustrate the principles of this application and practical application of the principles, so that other persons skilled in the art can make full use of this application and various embodiments that have various modifications applicable to conceived specific usage.

In the foregoing embodiments provided in this application, the method provided in the embodiments of this application is described from the perspective in which the electronic device serves as the execution body. To implement the functions in the method provided in the foregoing embodiments of this application, the electronic device may include the hardware structure and/or the software module, to implement the functions in the form of the hardware structure, the software module, or the combination of the hardware structure and the software module. Whether a function in the foregoing functions is performed by the hardware structure, the software module, or the combination of the hardware structure and the software module depends on the specific application and the design constraint condition of the technical solutions.

## Claims

1. A view display method, applied to an electronic device, wherein the method comprises:
displaying a first window of a first application, wherein the first window comprises a first view, and the first view is one of minimum control units comprised in the first window;
detecting a first operation performed on the first view;
generating a second window in response to the first operation, wherein the second window comprises the first view; and
displaying the second window.

2. The method according to claim 1, wherein the generating a second window in response to the first operation comprises:
displaying a view separation option in response to the first operation;
separating the first view from the first window in response to a second operation performed on the view separation option; and
adding the separated first view to the second window.

3. The method according to claim 2, wherein the first window corresponds to a first view tree, and the first view tree comprises a first sub-view tree corresponding to the first view; and
the separating the first view from the first window comprises:
separating the first sub-view tree from the first view tree, and separating the first view from the first window.

4. The method according to any one of claims 1 to 3, wherein after the generating a second window in response to the first operation, the method further comprises:
generating a restore control in the first window; and
restoring the first view to the first window in response to a third operation performed on the restore control.

5. The method according to any one of claims 1 to 4, wherein the displaying the second window comprises:
displaying the second window in a floating manner, wherein a size of the second window is smaller than a size of the first window.

6. The method according to any one of claims 1 to 5, wherein after the generating a second window in response to the first operation, the method further comprises:
displaying the first window in a first region, and displaying the second window in a second region, wherein the first region does not overlap the second region.

7. The method according to any one of claims 1 to 6, wherein the method further comprises:
displaying a window of a second application, wherein the second window is stacked on the window of the second application.

8. A view display method, applied to an electronic device, wherein the method comprises:
displaying a first window of a first application, wherein the first window comprises a first view, and the first view is one of minimum control units comprised in the first window;
detecting a fourth operation performed on the first view;
generating a third window in response to the fourth operation, wherein the third window comprises a copy of the first view; and
displaying the third window.

9. The method according to claim 8, wherein the generating a third window in response to the fourth operation comprises:
displaying a view sharing option in response to the fourth operation;
in response to a fifth operation performed on the view sharing option, replicating the first view in the first window to obtain the copy of the first view; and
adding the copy of the first view to the third window.

10. The method according to claim 9, wherein the first window corresponds to a first view tree, and the first view tree comprises a first sub-view tree corresponding to the first view;
the replicating the first view to obtain the copy of the first view comprises:
replicating the first sub-view tree in the first view tree to obtain a copy of the first sub-view tree, and replicating the first view in the first window to obtain the copy of the first view; and
the adding the copy of the first view to the third window comprises:
adding the copy of the first sub-view tree to a third view tree corresponding to the third window.

11. The method according to any one of claims 8 to 10, wherein the displaying the third window comprises:
displaying the third window in a floating manner, wherein a size of the third window is smaller than a size of the first window.

12. The method according to any one of claims 8 to 11, wherein the method further comprises:
displaying a window of a second application, wherein the third window is stacked on the window of the second application.

13. The method according to any one of claims 8 to 12, wherein the method further comprises:
displaying the window of the second application; and
after the displaying the third window, the method further comprises:
adding the copy of the first view in the third window to the window of the second application; and
deleting the third window.

14. An electronic device, wherein the electronic device comprises a display, one or more processors, a memory, a plurality of applications, and one or more computer programs; the one or more computer programs are stored in the memory; the one or more computer programs comprise instructions; and when the instructions are executed by the electronic device, the electronic device is enabled to perform the following steps:
displaying a first window of a first application, wherein the first window comprises a first view, and the first view is one of minimum control units comprised in the first window;
detecting a first operation performed on the first view;
generating a second window in response to the first operation, wherein the second window comprises the first view; and
displaying the second window.

15. The electronic device according to claim 14, wherein when the instructions are executed by the electronic device, the electronic device is enabled to specifically perform the following steps:
displaying a view separation option in response to the first operation;
separating the first view from the first window in response to a second operation performed on the view separation option; and
adding the separated first view to the second window.

16. The electric device according to claim 15, wherein the first window corresponds to a first view tree, and the first view tree comprises a first sub-view tree corresponding to the first view; and
when the instructions are executed by the electronic device, the electronic device is enabled to specifically perform the following step:
separating the first sub-view tree from the first view tree, and separating the first view from the first window.

17. The electronic device according to any one of claims 14 to 16, wherein when the instructions are executed by the electronic device, the electronic device is enabled to further perform the following steps:
generating a restore control in the first window; and
restoring the first view to the first window in response to a third operation performed on the restore control.

18. The electronic device according to any one of claims 14 to 17, wherein when the instructions are executed by the electronic device, the electronic device is enabled to specifically perform the following step:
displaying the second window in a floating manner, wherein a size of the second window is smaller than a size of the first window.

19. The electronic device according to any one of claims 14 to 18, wherein when the instructions are executed by the electronic device, the electronic device is enabled to further perform the following step:
displaying the first window in a first region, and displaying the second window in a second region, wherein the first region does not overlap the second region.

20. The electronic device according to any one of claims 14 to 19, wherein when the instructions are executed by the electronic device, the electronic device is enabled to further perform the following step:
displaying a window of a second application, wherein the second window is stacked on the window of the second application.

21. An electronic device, wherein the electronic device comprises a display, one or more processors, a memory, a plurality of applications, and one or more computer programs; the one or more computer programs are stored in the memory; the one or more computer programs comprise instructions; and when the instructions are executed by the electronic device, the electronic device is enabled to perform the following steps:
displaying a first window of a first application, wherein the first window comprises a first view, and the first view is one of minimum control units comprised in the first window;
detecting a fourth operation performed on the first view;
generating a third window in response to the fourth operation, wherein the third window comprises a copy of the first view; and
displaying the third window.

22. The electronic device according to claim 21, wherein when the instructions are executed by the electronic device, the electronic device is enabled to perform the following steps:
displaying a view sharing option in response to the fourth operation;
in response to a fifth operation performed on the view sharing option, replicating the first view in the first window to obtain the copy of the first view; and
adding the copy of the first view to the third window.

23. The electric device according to claim 22, wherein the first window corresponds to a first view tree, and the first view tree comprises a first sub-view tree corresponding to the first view;
when the instructions are executed by the electronic device, the electronic device is enabled to perform the following step:
replicating the first sub-view tree in the first view tree to obtain a copy of the first sub-view tree, and replicating the first view in the first window to obtain the copy of the first view; and
the adding the copy of the first view to the third window comprises:
adding the copy of the first sub-view tree to a third view tree corresponding to the third window.

24. The electronic device according to any one of claims 21 to 23, wherein when the instructions are executed by the electronic device, the electronic device is enabled to perform the following step:
displaying the third window in a floating manner, wherein a size of the third window is smaller than a size of the first window.

25. The electronic device according to any one of claims 21 to 24, wherein when the instructions are executed by the electronic device, the electronic device is enabled to perform the following step:
displaying a window of a second application, wherein the third window is stacked on the window of the second application.

26. The electronic device according to any one of claims 21 to 25, wherein when the instructions are executed by the electronic device, the electronic device is enabled to further perform the following steps:
displaying the window of the second application;
adding the copy of the first view in the third window to the window of the second application; and
deleting the third window.

27. A computer-readable storage medium, wherein the computer-readable storage medium stores a computer program, and when the computer program is run on an electronic device, the electronic device is enabled to perform the method according to any one of claims 1 to 7 or the method according to any one of claims 8 to 13.
